# EUROPEAN PATENT APPLICATION

(11) **EP 4 518 553 A1**
(43) Date of publication of application: **05.03.2025**
(21) Application number: 23796226.1
(22) Date of filing: 20.04.2023
(51) Int. Cl.: H04W 74/08, H04W 16/14, H04W 72/0457, H04W 72/40, H04W 92/18

(54) **COMMUNICATION DEVICE AND COMMUNICATION METHOD**

(30) Priority: 28.04.2022 JP 2022074460
(71) Applicant: Sony Group Corporation, Tokyo 108-0075 (JP)
(72) Inventor: KUSASHIMA, Naoki, Tokyo 108-0075 (JP); SHIMEZAWA, Kazuyuki, Tokyo 108-0075 (JP); UCHIYAMA, Hiromasa, Tokyo 108-0075 (JP); SUGAI, Ren, Tokyo 108-0075 (JP)
(74) Representative: Witte, Weller & Partner Patentanwälte mbB
(86) International application number: PCT/JP2023/015728
(87) International publication number: WO 2023/210484

(57) **Abstract**

A communication device that performs sidelink communication using an unlicensed band includes an acquisition unit that acquires information of a resource pool including one or a plurality of sidelink BWPs (Sidelink Bandwidth Parts) and a communication control unit that performs, based on the information of the resource pool, the sidelink communication using the unlicensed band. The one or the plurality of sidelink BWPs are set to correspond to one or a plurality of LBT bandwidths (Listen Before Talk Bandwidths).

## Description

### Field

The present disclosure relates to a communication device and a communication method.

### Background

Sidelink communication is known as one form of cellular communication. In recent years, in order to enable inexpensive and easy use of the sidelink communication, a technology for enabling the sidelink communication using an unlicensed band has been developed.

### Citation List

### Non Patent Literature

Non Patent Literature 1: RP-213678, OPPO, LG Electronics, "New WID on NR sidelink evolution", 3GPP TSG RAN Meeting #94e, Dec. 2021

### Summary

### Technical Problem

When using the unlicensed band, a communication device must send a signal to satisfy a requirement of an occupied channel bandwidth. For that reason, in order to implement the sidelink communication using the unlicensed band, the communication device has to satisfy not only a requirement of the sidelink communication but also the requirement of the occupied channel bandwidth. When the unlicensed band is not used well, it is difficult to implement high communication performance (for example, high throughput, low delay, or high reliability) even if the sidelink communication using the unlicensed band is implemented.

Therefore, the present disclosure proposes a communication device and a communication method that can implement high communication performance.

Note that the problem or the object described above is merely one of a plurality of problems or objects that can be solved or achieved by a plurality of embodiments disclosed in the present specification.

### Solution to Problem

In order to solve the above problem, a communication device according to one aspect of the present disclosure that performs sidelink communication using an unlicensed band, the communication device includes: an acquisition unit that acquires information of a resource pool including one or a plurality of sidelink BWPs (Sidelink Bandwidth Parts); and a communication control unit that performs, based on the information of the resource pool, the sidelink communication using the unlicensed band, wherein the one or the plurality of sidelink BWPs are set to correspond to one or a plurality of LBT bandwidths (Listen Before Talk Bandwidths).

### Brief Description of Drawings

FIG. 1 is a diagram illustrating an example of information of a resource pool.
FIG. 2 is a diagram illustrating a setting example of a communication system according to an embodiment of the present disclosure.
FIG. 3 is a diagram illustrating a setting example of a management device according to the embodiment of the present disclosure.
FIG. 4 is a diagram illustrating a setting example of a base station according to the embodiment of the present disclosure.
FIG. 5 is a diagram illustrating a setting example of a relay station according to the embodiment of the present disclosure.
FIG. 6 is a diagram illustrating a setting example of a terminal device according to the embodiment of the present disclosure.
FIG. 7 is a diagram illustrating an example of a resource grid.
FIG. 8 is a diagram illustrating an example of a bandwidth part.
FIG. 9 is a diagram illustrating an overview of sidelink communication.
FIG. 10 is a diagram illustrating an example of a frame configuration of a sidelink.
FIG. 11 is a diagram illustrating an example of a frame configuration of a sidelink.
FIG. 12 is a diagram illustrating a resource pool of a sidelink.
FIG. 13 is a diagram for explaining a resource allocation mode 2 (d).
FIG. 14 is a diagram for explaining four types of LBT categories.
FIG. 15 is a diagram illustrating a frame-based configuration of frame-based equipment.
FIG. 16 is an example of a procedure for sharing a COT acquired by a third party device.
FIG. 17 is a diagram illustrating a definition of a channel bandwidth.
FIG. 18 is a diagram illustrating an example of an interlaced waveform in the case in which a subcarrier interval is 30 kHz.
FIG. 19 is a diagram illustrating an example of frequency hopping.
FIG. 20 is a diagram illustrating an example of setting of resource pools in the case in which the terminal device performs the sidelink communication with a continuous waveform.
FIG. 21 is a diagram illustrating another example of the setting of the resource pools in the case in which the terminal device performs the sidelink communication in the continuous waveform.
FIG. 22 is a diagram illustrating another example of the setting of the resource pools in the case in which the terminal device performs the sidelink communication in the continuous waveform.
FIG. 23 is a diagram illustrating another example of the setting of the resource pools in the case in which the terminal device performs the sidelink communication in the continuous waveform.
FIG. 24 is a diagram illustrating an example of a bandwidth of a PSFCH of a PSFCH format 0.
FIG. 25 is a diagram illustrating an example of repeated transmission of a signal of the PSFCH format 0 in a frequency direction.
FIG. 26 is a diagram illustrating an example of sequence extension of the PSFCH format 0.
FIG. 27 is a diagram illustrating an example of simultaneous transmission of a PSFCH and another sidelink physical channel.
FIG. 28 is a diagram illustrating an example of S-SS/PSBCH block transmission of a continuous waveform.
FIG. 29 is a diagram illustrating an example of S-SS/PSBCH block transmission of a continuous waveform.
FIG. 30 is a diagram illustrating an example of S-SS/PSBCH block transmission of a continuous waveform.
FIG. 31 is a diagram illustrating an example of setting of resource pools in the case in which the terminal device performs the sidelink communication with an interlaced waveform.
FIG. 32 is a diagram illustrating an example of setting of resource pools in the case in which a plurality of signal waveforms are mixed.
FIG. 33 is a diagram illustrating another example of the setting of the resource pools in the case in which the plurality of signal waveforms are mixed.
FIG. 34 is a diagram illustrating another example of the setting of the resource pools in the case in which the plurality of signal waveforms are mixed.
FIG. 35 is a diagram illustrating an example of resource mapping of a PSCCH/a PSSCH in interlaced waveform transmission.
FIG. 36 is a diagram illustrating an example of resource mapping of a PSCCH/a PSSCH in interlaced waveform transmission.
FIG. 37 is a diagram illustrating an example of resource mapping of a PSFCH in interlaced waveform transmission.

### Description of Embodiments

Embodiments of the present disclosure are explained in detail below with reference to the drawings. Note that, in the embodiments explained below, redundant explanation is omitted by denoting the same parts with the same reference numerals and signs.

In the present specification and the drawings, a plurality of components having substantially the same functional configuration may be distinguished by adding different numbers after the same reference signs. For example, a plurality of components having substantially the same functional configuration are distinguished as terminal devices 40₁, 40₂, and 40₃ according to necessity. However, when it is not particularly necessary to distinguish each of a plurality of components having substantially the same functional configuration, only the same reference numeral is added. For example, when it is unnecessary to particularly distinguish the terminal devices 40₁, 40₂, and 40₃, the terminal devices 40₁, 40₂, and 40₃ are simply referred to as terminal devices 40.

One or a plurality of embodiments (including examples and modifications) explained below can be respectively independently implemented. On the other hand, at least a part of the plurality of embodiments explained below may be implemented in combination with at least a part of other embodiments as appropriate. These plurality of embodiments can include new characteristics different from one another. Therefore, these plurality of embodiments can contribute to solving objects or problems different from one another and can achieve effects different from one another.

### <<Overview>>

Radio access technologies (RATs) such as LTE (Long Term Evolution) and NR (New Radio) have been studied in the 3GPP (3rd Generation Partnership Project). The LTE and the NR are types of a cellular communication technology and enable mobile communication of a terminal device by arranging a plurality of areas covered by a base station in a cell shape. At this time, a single base station may manage a plurality of cells.

Note that, in the following explanation, it is assumed that "LTE " includes LTE-A (LTE-Advanced), LTE-A Pro (LTE-Advanced Pro), and E-UTRA (Evolved Universal Terrestrial Radio Access). The NR includes NRAT (New Radio Access Technology) and FE-UTRA (Further E-UTRA). In the following explanation, a cell adapted to the LTE is referred to as LTE cell and a cell adapted to the NR is referred to as NR cell.

The NR is a next generation (fifth generation) radio access technology (RAT) of the LTE. The NR is a radio access technology that can cope with various use cases including eMBB (Enhanced Mobile Broadband), mMTC (Massive Machine Type Communications), and URLLC (Ultra-Reliable and Low Latency Communications). The NR has been studied aiming at a technical framework adapted to usage scenarios, requirement conditions, arrangement scenarios, and the like in these use cases.

Sidelink communication has been introduced in 3GPP with communication for public safety and vehicle to anything (V2X) as main use cases. In recent years, utilization of the sidelink communication has been expected for not only the V2X but also commercial use communication. Examples of the commercial use communication include XR(VR (Virtual Reality), AR (Augmented Reality), or MR (Mixed Reality)) gaming, real-time sharing of XR content, media sharing, wireless tethering, an industrial IoT (Internet of Things) network, and a home network.

The commercial use communication requires provision of services that are inexpensive and easy in addition to high quality. Therefore, in the present embodiment, sidelink communication using an unlicensed band is considered. The unlicensed band is a frequency band that can be used by anyone. For that reason, when the unlicensed band is used, inexpensive and easy service provision can be implemented. Note that the unlicensed band is sometimes referred to as unlicensed spectrum, licensed shared band, or shared spectrum.

When using the unlicensed band, a communication device must send a signal to satisfy a requirement of an occupied channel bandwidth. For that reason, in order to implement the sidelink communication using the unlicensed band, the communication device has to satisfy not only a requirement of the sidelink communication but also the requirement of the occupied channel bandwidth. When the unlicensed band is not used well, it is difficult to implement high communication performance (for example, high throughput, low delay, or high reliability) even if the sidelink communication using the unlicensed band is implemented.

Therefore, in the present embodiment, the problems described above are solved by the following method.

The terminal device according to the present embodiment uses a resource pool in the sidelink communication using the unlicensed band. The resource pool is a set of resources that the terminal device can use for the sidelink communication. The terminal device determines a sidelink transmission resource based on information of the resource pool.

In the present embodiment, frequency resources are allocated to satisfy the requirement of the occupied channel bandwidth in an operation in the unlicensed band (an operation involving shared spectrum channel access). For example, in order to perform the sidelink communication using the unlicensed band, the terminal device according to the present embodiment acquires information of a resource pool including one or a plurality of sidelink BWPs (Sidelink Bandwidth Parts) from another communication device. The resource pool is a set of resources that the terminal device can use for the sidelink communication. The other communication device may be a base station or may be another terminal device (for example, a primary UE or a UE to be a communication partner). The terminal device determines a sidelink transmission resource based on information of the resource pool.

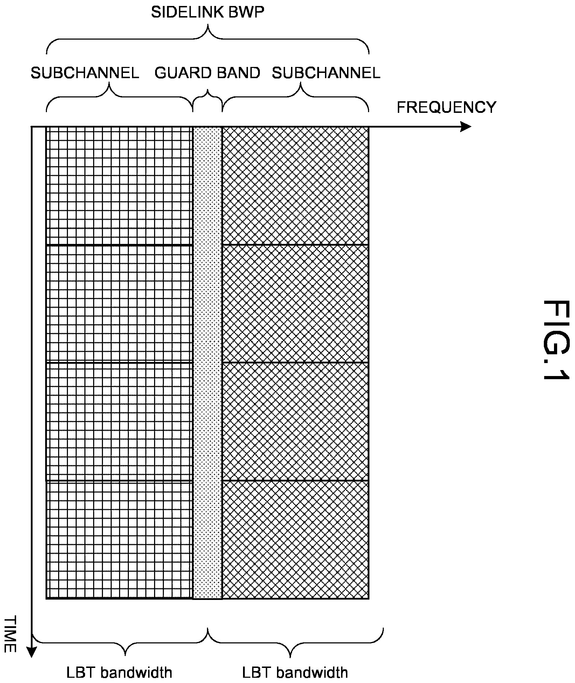

FIG. 1 is a diagram illustrating an example of information of a resource pool. In the example illustrated in FIG. 1, the resource pool includes a plurality of sidelink BWPs. In the present embodiment, the plurality of sidelink BWPs configuring the resource pool is set to correspond to one or a plurality of LBT bandwidths (Listen Before Talk Bandwidths).

Here, the sidelink BWP is a resource that the terminal device uses for the sidelink communication. For example, the sidelink BWP is a resource block to which a sidelink physical channel is allocated. The sidelink physical channel is, for example, a PSCCH (Physical Sidelink Control Channel) or a PSSCH (Physical Sidelink Shared Channel). In the unlicensed band, an LBT bandwidth is defined as a bandwidth for executing LBT. The LBT bandwidth is, for example, the same as a nominal bandwidth (Nominal Channel Bandwidth).

In communication using the unlicensed band, a guard band is provided between adjacent LBT bandwidths in order to suppress the influence of power leakage from an adjacent channel bandwidth due to out-of-band radiation. In the example illustrated in FIG. 1, a guard band is provided between a plurality of subchannels configuring the sidelink BWP.

The terminal device performs the sidelink communication using the unlicensed band based on the acquired information of the resource pool. For example, in the example illustrated in FIG. 1, the terminal device selects one subchannel out of a resource pool including two subchannels. Then, the terminal device performs the sidelink communication using the selected subchannel.

Accordingly, since a bandwidth (for example, a bandwidth of a resource block to which a PSCCH/a PSSCH is allocated) of a sidelink BWP used for a sidelink is equivalent to the LBT bandwidth, it is easy for the terminal device to satisfy the requirement of the occupied channel bandwidth. As a result, the terminal device can implement high communication performance even when the unlicensed band is used for the sidelink communication.

The overview of the present embodiment is explained above. A communication system according to the present embodiment is explained in detail below.

### <<Configuration of the communication system>>

First, a configuration of a communication system 1 is specifically explained with reference to the drawings.

### <Overall configuration of the communication system>

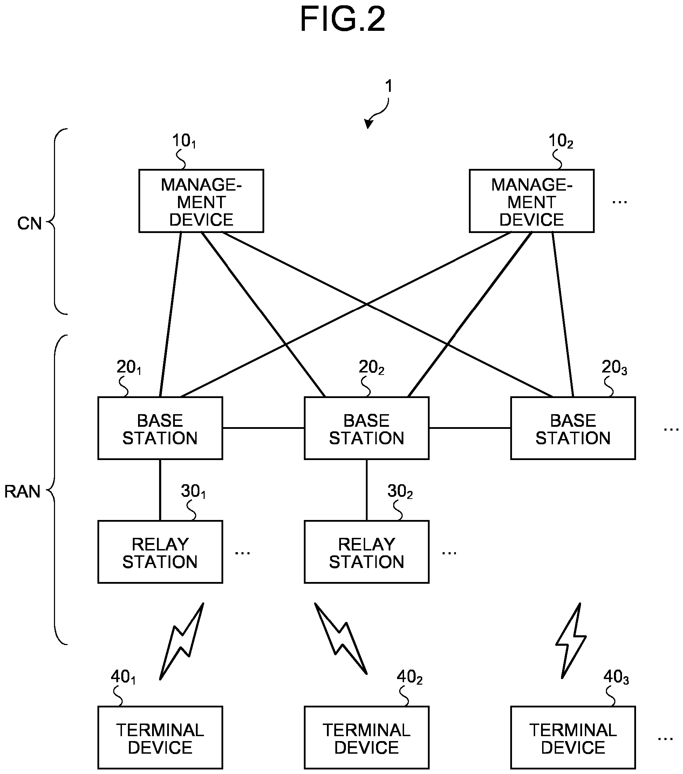

FIG. 2 is a diagram illustrating a setting example of the communication system 1 according to the embodiment of the present disclosure. The communication system 1 includes a management device 10, a base station 20, a relay station 30, and a terminal device 40. The communication system 1 provides a user with a wireless network capable of performing mobile communication by wireless communication devices configuring the communication system 1 operating in cooperation. A radio network in the present embodiment is configured by, for example, a radio access network and a core network. Note that, in the present embodiment, the wireless communication device is a device having a function of wireless communication. In the example illustrated in FIG. 1, the base station 20, the relay station 30, and the terminal device 40 correspond to the wireless communication device. In the following explanation, the wireless communication device may be simply referred to as communication device.

The communication system 1 may include a plurality of management devices 10, a plurality of base stations 20, a plurality of relay stations 30, and a plurality of terminal devices 40. In the example illustrated in FIG. 2, the communication system 1 includes management devices 10₁ and 10, as the management device 10 and includes base stations 20₁ and 20₂ as the base station 20. The communication system 1 includes relay stations 30₁ and 30₂ and the like as the relay station 30 and includes terminal devices 40₁, 40₂, and 40₃ and the like as the terminal device 40.

Note that the devices in the figure may be considered devices in a logical sense. That is, a part of the devices in the figure may be implemented by a virtual machine (VM), a container (Container), and the like, which may be implemented on physically the same hardware.

Note that the communication system 1 may support a radio access technology (RAT) such as LTE (Long Term Evolution) and NR (New Radio). The LTE and the NR are types of a cellular communication technology and enable mobile communication of a terminal device by arranging a plurality of areas covered by a base station in a cell shape.

Note that a radio access scheme used by the communication system 1 is not limited to the LTE and the NR and may be another radio access scheme such as W-CDMA (Wideband Code Division Multiple Access) or cdma2000 (Code Division Multiple Access 2000).

A base station or a relay station configuring the communication system 1 may be a ground station or may be a non-ground station. The non-ground station may be a satellite station or may be an aircraft station. If the non-ground station is the satellite station, the communication system 1 may be a Bent-pipe (Transparent) type mobile satellite communication system.

Note that, in the present embodiment, the ground station (also referred to as ground base station) refers to a base station (including a relay station) installed on the ground. Here, the "ground" is a ground in a broad sense including not only the land but also underground, on water, and underwater. Note that, in the following explanation, the description of "ground station" may be replaced with "gateway".

Note that an LTE base station is sometimes referred to as eNodeB (Evolved Node B) or eNB. An NR base station is sometimes referred to as gNodeB or gNB. In the LTE and the NR, the terminal device (also referred to as mobile station or terminal) is sometimes referred to as UE (User Equipment). Note that the terminal device is a type of a communication device and is also referred to as mobile station or terminal.

In the present embodiment, the concept of the communication device includes not only a portable mobile body device (terminal device) such as a portable terminal but also a device installed in a structure or a mobile body. The structure or the mobile body itself may be regarded as the communication device. The concept of the communication device includes not only the terminal device but also the base station and the relay station. The communication device is a type of a processing device and an information processing device. The communication device can also be referred to as transmission device or reception device.

In the following explanation, configurations of the devices configuring the communication system 1 are specifically explained. Note that the configurations of the devices explained below are merely an example. The configurations of the devices may be different from the configurations explained below.

### <Configuration of the management device>

Subsequently, a configuration of the management device 10 is explained.

The management device 10 is a device that manages a wireless network. For example, the management device 10 is a device that manages communication of the base station 20. The management device 10 may be, for example, a device having a function of an MME (Mobility Management Entity). The management device 10 may be a device having a function as an AMF (Access and Mobility Management Function) and/or an SMF (Session Management Function). Naturally, the functions of the management device 10 are not limited to the MME, the AMF, and the SMF. The management device 10 may be a device having a function as an NSSF (Network Slice Selection Function), an AUSF (Authentication Server Function), a PCF (Policy Control Function), and a UDM (Unified Data Management). The management device 10 may be a device having a function of an HSS (Home Subscriber Server).

Note that the management device 10 may have a function of a gateway. For example, the management device 10 may have a function of an S-GW (Serving Gateway) or a P-GW (Packet Data Network Gateway). The management device 10 may have a function as a user plane function (UPF).

The core network is configured from a plurality of network functions. The network functions may be aggregated into one physical device or may be distributed to a plurality of physical devices. That is, the management device 10 can be dispersedly disposed in a plurality of devices. Further, this distributed disposition may be controlled to be dynamically executed. The base station 20 and the management device 10 configure one network and provide a wireless communication service to the terminal device 40. The management device 10 is connected to the Internet. The terminal device 40 can use, via the base station 20, various services provided via the Internet.

Note that the management device 10 may not always be a device configuring the core network. For example, it is assumed that the core network is a core network of W-CDMA (Wideband Code Division Multiple Access) or cdma2000 (Code Division Multiple Access 2000). At this time, the management device 10 may be a device that functions as an RNC (Radio Network Controller).

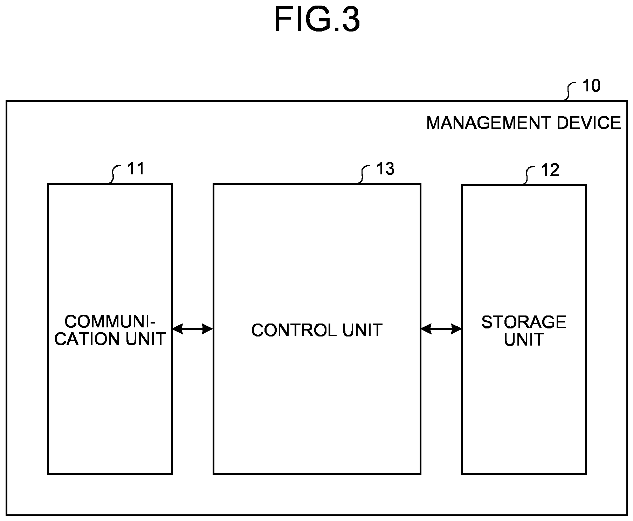

FIG. 3 is a diagram illustrating a setting example of the management device 10 according to the embodiment of the present disclosure. The management device 10 includes a communication unit 11, a storage unit 12, and a control unit 13. Note that the configuration illustrated in FIG. 3 is a functional configuration. Hardware configuration may be different from the functional configuration. The functions of the management device 10 may be statically or dynamically distributed and implemented in a plurality of physically separated components. For example, the management device 10 may configured by a plurality of server devices.

The communication unit 11 is a communication interface for communicating with other devices. The communication unit 11 may be a network interface or may be an equipment connection interface. For example, the communication unit 11 may be a LAN (Local Area Network) interface such as an NIC (Network Interface Card) or may be a USB interface configured by a USB (Universal Serial Bus) host controller, a USB port, and the like. The communication unit 11 may be a wired interface or a wireless interface. The communication unit 11 functions as communication means of the management device 10. The communication unit 11 communicates with the base station 20 and the like according to control of the control unit 13.

The storage unit 12 is a data readable/writable storage device such as a DRAM (Dynamic Random Access Memory), an SRAM (Static Random Access Memory), a flash memory, or a hard disk. The storage unit 12 functions as storage means of the management device 10. The storage unit 12 stores, for example, a connection state of the terminal device 40. For example, the storage unit 12 stores a state of RRC (Radio Resource Control) or a state of ECM (EPS Connection Management) or 5G System CM(Connection Management) of the terminal device 40. The storage unit 12 may function as a home memory that stores position information of the terminal device 40.

The control unit 13 is a controller that controls the units of the management device 10. The control unit 13 is implemented by a processor such as a CPU (Central Processing Unit), an MPU (Micro Processing Unit), or a GPU (Graphics Processing Unit). For example, the control unit 13 is implemented by the processor executing various programs stored in a storage device inside the management device 10 using a RAM (Random Access Memory) or the like as a work area. Note that the control unit 13 may be implemented by an integrated circuit such as an ASIC (Application Specific Integrated Circuit) or an FPGA (Field Programmable Gate Array). All of the CPU, the MPU, the GPU, the ASIC, and the FPGA can be regarded as the controller.

### <Configuration of Base Station>

Subsequently, a configuration of the base station 20 is explained.

The base station 20 is a wireless communication device that performs wireless communication with the terminal device 40. The base station 20 may be configured to wirelessly communicate with the terminal device 40 via the relay station 30 or may be configured to directly wirelessly communicate with the terminal device 40.

The base station 20 is a type of a communication device. More specifically, the base station 20 is a device equivalent to a radio base station (Base Station, Node B, eNB, gNB, or the like) or a wireless access point. The base station 20 may be a wireless relay station. The base station 20 may be an optical extension device called RRH (Remote Radio Head) or RU (Radio Unit). The base station 20 may be a receiving station such as an FPU (Field Pickup Unit). The base station 20 may be an IAB (Integrated Access and Backhaul) donor node or an IAB relay node that provides a radio access line and a radio backhaul line with time division multiplexing, frequency division multiplexing, or space division multiplexing.

Note that a radio access technology used by the base station 20 may be a cellular communication technology or a wireless LAN technology. Naturally, the radio access technology used by the base station 20 is not limited the above and may be another radio access technology. For example, the radio access technology used by the base station 20 may be a LPWA (Low Power Wide Area) communication technology. Naturally, wireless communication used by the base station 20 may be wireless communication using millimeter waves. The wireless communication used by the base station 20 may be wireless communication using radio waves or wireless communication (optical wireless) using infrared rays or visible light.

The base station 20 may be capable of performing NOMA (Non-Orthogonal Multiple Access) communication with the terminal device 40. Here, the NOMA communication is communication (transmission, reception, or both of transmission and reception) using a non-orthogonal resource. Note that the base station 20 may be capable of performing the NOMA communication with the other base stations 20.

Note that the base stations 20 may be capable of communicating with one another via a base station-core network interface (for example, NG Interface or S1 Interface). This interface may be either wired or wireless. The base stations may be capable of communicating with one another via an inter-base station interface (for example, an Xn Interface, an X2 Interface, an S1 Interface, an F1 Interface, or the like). This interface may be either wired or wireless.

Note that the concept of the base station includes not only a donor base station but also a relay base station (also referred to as relay station). For example, the relay base station may be any one of RF Repeater, Smart Repeater, and Intelligent Surface. The concept of the base station includes not only a structure having a function of the base station but also a device installed in the structure.

The structure is a building such as a high-rise building, a house, a steel tower, a station facility, an airport facility, a harbor facility, an office building, a school building, a hospital, a factory, a commercial facility, or a stadium. Note that the concept of the structure includes not only a building but also a structure (Non-building structure) such as a tunnel, a bridge, a dam, a wall, or an iron pillar and equipment such as a crane, a gate, or a windmill. The concept of the structure includes not only a structure on the land (the ground in a narrow sense) or in the ground but also a structure on water such as a pier or a mega-float and a structure under water such as marine observation equipment. The base station can also be referred to as information processing device.

The base station 20 may be a donor station or a relay station (a relay station). The base station 20 may be a fixed station or a mobile station. The mobile station is a wireless communication device (for example, a base station) configured to be movable. At this time, the base station 20 may be a device installed in a mobile body or may be the mobile body itself. For example, a relay station having mobility can be regarded as the base station 20 functioning as a mobile station. A device originally having a mobility and implemented with a function of a base station (at least a part of the function of the base station) such as a vehicle, a UAV (Unmanned Aerial Vehicle) represented by a drone, or a smartphone also corresponds to the base station 20 functioning as a mobile station.

Here, the mobile body may be a mobile terminal such as a smartphone or a mobile phone. The mobile body may be a mobile body (for example, a vehicle such as an automobile, a bicycle, a bus, a truck, a motorcycle, a train, or a linear motor car) that moves on the land (the ground in a narrow sense) or a mobile body (for example, a subway) that moves in the ground (for example, in a tunnel).

The mobile body may be a mobile body (for example, a ship such as a passenger ship, a cargo ship, or a hovercraft) that moves on water or a mobile body (for example, a submersible such as a submersible ship, a submarine, or an unmanned submersible) that moves under water.

Note that the mobile body may be a mobile body (for example, an aircraft such as an airplane, an airship, or a drone) that moves in the atmosphere.

The base station 20 may be a ground base station (a ground station) installed on the ground. For example, the base station 20 may be a base station disposed in a structure on the ground or may be a base station installed in a mobile body moving on the ground. More specifically, the base station 20 may be an antenna installed in a structure such as a building and a signal processing device connected to the antenna. Naturally, the base station 20 may be the structure or the mobile body itself. The "ground" is a ground in a broad sense including not only on the land (on the ground in a narrow sense) but also underground, on water, and underwater. Note that the base station 20 is not limited to the ground base station. For example, when the communication system 1 is a satellite communication system, the base station 20 may be an aircraft station. From the perspective of a satellite station, an aircraft station located on the earth is a ground station.

Note that the base station 20 is not limited to a ground station. The base station 20 may be a non-ground base station (non-ground station) capable of floating in the air or space. For example, the base station 20 may be an aircraft station or a satellite station.

The satellite station is a satellite station capable of floating outside the atmosphere. The satellite station may be a device loaded on a space mobile body such as an artificial satellite or may be the space mobile body itself. The space mobile body is a mobile body that moves outside the atmosphere. Examples of the space mobile body include artificial celestial bodies such as an artificial satellite, a spacecraft, a space station, and a probe.

Note that a satellite serving as the satellite station may be any of a low earth orbiting (LEO) satellite, a medium earth orbiting (MEO) satellite, a geostationary earth orbiting (GEO) satellite, and a highly elliptical orbiting (HEO) satellite. Naturally, the satellite station may be a device loaded on the low earth orbiting satellite, the middle earth orbiting satellite, the geostationary earth orbiting satellite, or the high elliptical orbiting satellite.

The aircraft station is a wireless communication device capable of floating in the atmosphere such as an aircraft. The aircraft station may be a device loaded on an aircraft or the like or may be the aircraft itself. Note that the concept of the aircraft includes not only a heavy aircraft such as an airplane and a glider but also a light aircraft such as a balloon and an airship. The concept of the aircraft includes not only the heavy aircraft and the light aircraft but also a rotorcraft such as a helicopter and an auto-gyroscope. Note that the aircraft station (or an aircraft on which the aircraft station is loaded) may be an unmanned aircraft such as a drone.

Note that the concept of the unmanned aircraft also includes an unmanned aircraft system (UAS) and a tethered UAS. The concept of the unmanned aircraft includes a Lighter than Air UAS (LTA) and a Heavier than Air UAS (HTA). Besides, the concept of the unmanned aircraft also includes High Altitude UAS Platforms (HAPs).

The size of the coverage of the base station 20 may be a large size such the size of as a macro cell or the size of a small cell such as the size of a picocell. Naturally, the size of the coverage of the base station 20 may be an extremely small size such as the size of a femtocell. The base station 20 may have a beamforming capability. In this case, a cell or a service area may be formed in the base station 20 for each beam.

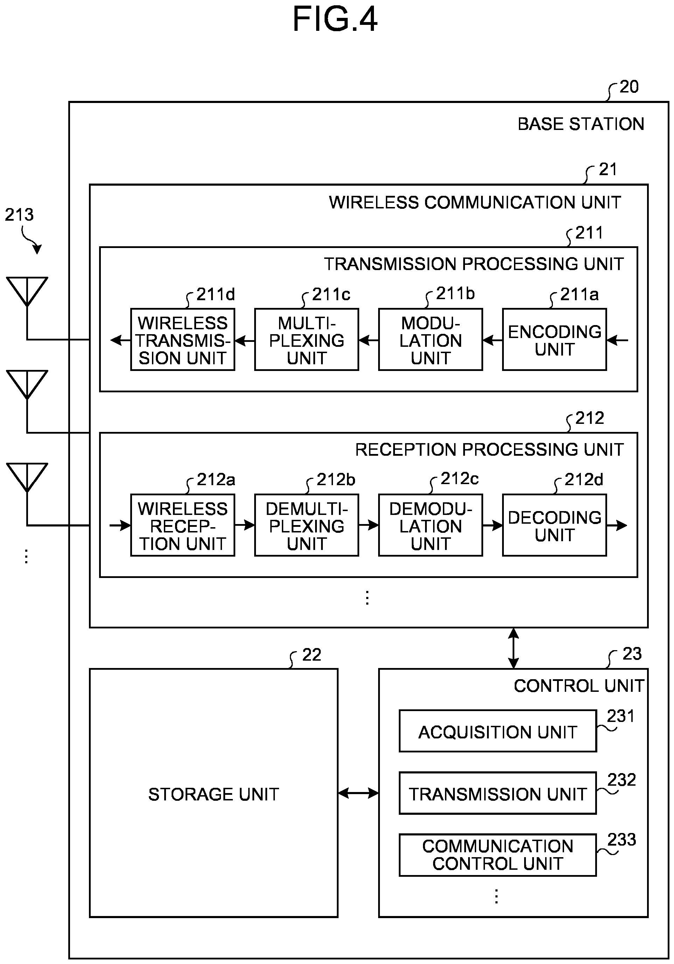

FIG. 4 is a diagram illustrating a setting example of the base station 20 according to the embodiment of the present disclosure. The base station 20 includes a wireless communication unit 21, a storage unit 22, and a control unit 23. Note that the configuration illustrated in FIG. 4 is a functional configuration. A hardware configuration may be different from this configuration. The functions of the base station 20 may be implemented in a distributed manner in a plurality of physically separated components.

The wireless communication unit 21 is a signal processing unit for wirelessly communicating with other wireless communication devices (for example, the terminal device 40). The wireless communication unit 21 operates under the control of the control unit 23. The wireless communication unit 21 is adapted to one or a plurality of radio access schemes. For example, the wireless communication unit 21 is adapted to both of the NR and the LTE. The wireless communication unit 21 may be adapted to W-CDMA or cdma2000 in addition to the NR or the LTE. The wireless communication unit 21 may be adapted to an automatic retransmission technology such as HARQ (Hybrid Automatic Repeat reQuest).

The wireless communication unit 21 includes a transmission processing unit 211, a reception processing unit 212, and an antenna 213. The wireless communication unit 21 may include a plurality of transmission processing units 211, a plurality of reception processing units 212, and a plurality of antennas 213. Note that, when the wireless communication unit 21 is adapted to a plurality of radio access schemes, the units of the wireless communication unit 21 can be configured individually for each of the radio access schemes. For example, the transmission processing unit 211 and the reception processing unit 212 may be individually configured by the LTE and the NR. The antenna 213 may be configured by a plurality of antenna elements (for example, a plurality of patch antennas). In this case, the wireless communication unit 21 may be configured to be capable of performing beamforming. The wireless communication unit 21 may be configured to be capable of performing polarization beamforming using vertically polarized waves (V-polarized waves) and horizontally polarized waves (H-polarized waves).

The transmission processing unit 211 performs transmission processing for downlink control information and downlink data. For example, the transmission processing unit 211 encodes the downlink control information and the downlink data input from the control unit 23 using an encoding scheme such as block encoding, convolutional encoding, turbo encoding, or the like. Here, as the encoding, encoding by a polar code or encoding by an LDPC code (Low Density Parity Check Code) may be performed. Then, the transmission processing unit 211 modulates encoded bits with a predetermined modulation scheme such as BPSK, QPSK, 16QAM, 64QAM, or 256QAM. In this case, signal points on a constellation do not always need to be equidistant. The constellation may be a non uniform constellation (NUC). Then, the transmission processing unit 211 multiplexes modulation symbols of channels and a downlink reference signal and arranges the multiplexed symbols and the multiplexed downlink reference signal in a predetermined resource element. Then, the transmission processing unit 211 performs various kinds of signal processing on the multiplexed signal. For example, the transmission processing unit 211 performs processing such as conversion into a frequency domain by fast Fourier transform, addition of a guard interval (cyclic prefix), generation of a baseband digital signal, conversion into an analog signal, quadrature modulation, up-conversion, removal of an extra frequency component, and amplification of power. The signal generated by the transmission processing unit 211 is transmitted from the antenna 213.

The reception processing unit 212 processes an uplink signal received via the antenna 213. For example, the reception processing unit 212 performs down-conversion, removal of an unnecessary frequency component, control of an amplification level, quadrature demodulation, conversion into a digital signal, removal of a guard interval (cyclic prefix), extraction of a frequency domain signal by fast Fourier transform, and the like on the uplink signal. Then, the reception processing unit 212 separates uplink channels such as a PUSCH (Physical Uplink Shared Channel) and a PUCCH (Physical Uplink Control Channel) and an uplink reference signal from the signals subjected to these kinds of processing. Further, the reception processing unit 212 demodulates the received signal using a modulation scheme such as BPSK (Binary Phase Shift Keying) or QPSK (Quadrature Phase Shift Keying) with respect to the modulation symbol of the uplink channel. The modulation scheme used for the demodulation may be 16QAM (Quadrature Amplitude Modulation), 64QAM, or 256QAM. In this case, signal points on a constellation do not always need to be equidistant. The constellation may be a non-uniform constellation (NUC). The reception processing unit 212 performs decoding processing on encoded bits of the demodulated uplink channels. Decoded uplink data and uplink control information are output to the control unit 23.

The antenna 213 is an antenna device (an antenna unit) that mutually converts a current and a radio wave. The antenna 213 may be configured by one antenna element (for example, one patch antenna) or may be configured by a plurality of antenna elements (for example, a plurality of patch antennas). When the antenna 213 is configured by a plurality of antenna elements, the wireless communication unit 21 may be configured to be capable of performing beamforming. For example, the wireless communication unit 21 may be configured to generate a directional beam by controlling the directivity of a radio signal using the plurality of antenna elements. Note that the antenna 213 may be a dual-polarized antenna. When the antenna 213 is a dual-polarized antenna, the wireless communication unit 21 may use vertically polarized waves (V-polarized waves) and horizontally polarized waves (H-polarized waves) in transmitting radio signals. Then, the wireless communication unit 21 may control the directivity of the radio signal transmitted using the vertically polarized wave and the horizontally polarized wave. Furthermore, the wireless communication unit 21 may transmit and receive spatially multiplexed signals via a plurality of layers including a plurality of antenna elements.

The storage unit 22 is a data readable/writable storage device such as a DRAM, an SRAM, a flash memory, or a hard disk. The storage unit 22 functions as storage means of the base station 20.

The control unit 23 is a controller that controls the units of the base station 20. The control unit 23 is implemented by a processor such as a CPU (Central Processing Unit) or an MPU (Micro Processing Unit). For example, the control unit 23 is implemented by the processor executing various programs stored in a storage device inside the base station 20 using a RAM (Random Access Memory) or the like as a work area. Note that the control unit 23 may be implemented by an integrated circuit such as an ASIC (Application Specific Integrated Circuit) or an FPGA (Field Programmable Gate Array). All of the CPU, the MPU, the ASIC, and the FPGA can be regarded as a controller. The control unit 23 may be implemented by a GPU (Graphics Processing Unit) in addition to or instead of the CPU.

As illustrated in FIG. 4, the control unit 23 includes an acquisition unit 231, a transmission unit 232, and a communication control unit 233. Blocks (the acquisition unit 231 to the communication control unit 233) configuring the control unit 23 are respectively functional blocks indicating functions of the control unit 23. These functional blocks may be software blocks or may be hardware blocks. For example, each of the functional blocks explained above may be one software module implemented by software (including a microprogram) or may be one circuit block on a semiconductor chip (a die). Naturally, each of the functional blocks may be one processor or one integrated circuit. A configuration method for the functional blocks is optional. Note that the control unit 23 may be configured by functional units different from the functional blocks explained above. Operations of the control unit 23 may be the same as operations of the blocks of the control unit 43 of the terminal device 40.

In several embodiments, the concept of the base station may consist of a set of a plurality of physical or logical devices. For example, in the present embodiment, the base station may be distinguished into a plurality of devices such as a BBU (Baseband Unit) and an RU (Radio Unit). Then, the base station may be interpreted as an aggregate of the plurality of devices. The base station may be one of the BBU and the RU or may be both of the BBU and the RU. The BBU and the RU may be connected by a predetermined interface (for example, eCPRI (enhanced Common Public Radio Interface)). Note that the RU may also be referred to as RRU (Remote Radio Unit) or RD(Radio DoT). The RU may correspond to a gNB-DU (gNB Distributed Unit) explained below. Further, the BBU may correspond to a gNB-CU (gNB Central Unit) explained below. Alternatively, the RU may be a wireless device connected to a gNB-DU explained below. The gNB-CU, the gNB-DU, and the RU connected to the gNB-DU may be configured to conform to an O-RAN (Open Radio Access Network). Further, the RU may be a device formed integrally with an antenna. An antenna (for example, an antenna integrally formed with an RU) included in the base station may adopt an Advanced Antenna System and support MIMO (for example, FD (Full Dimension)-MIMO) or beamforming. The antenna included in the base station may include, for example, sixty-four transmission antenna ports and sixty-four reception antenna ports.

The antenna loaded in the RU may be an antenna panel configured from one or more antenna elements. The RU may be loaded with one or more antenna panels. For example, the RU may be loaded with two types of antenna panels including a horizontally polarized antenna panel and a vertically polarized antenna panel or two antenna panels including a clockwise circularly polarized antenna panel and a counterclockwise circularly polarized antenna panel. The RU may form and control an independent beam for each of the antenna panels.

Note that a plurality of base stations may be connected to one another. One or a plurality of base stations may be included in a radio access network (RAN). In this case, the base station is sometimes simply referred to as RAN, RAN node, AN (Access Network), or AN node. Note that a RAN in LTE is sometimes referred to as EUTRAN (Enhanced Universal Terrestrial RAN). A RAN in NR is sometimes referred to as NGRAN. A RAN in W-CDMA (UMTS) is sometimes referred to as UTRAN.

Note that an LTE base station is sometimes referred to as eNodeB (Evolved Node B) or eNB. At this time, the EUTRAN includes one or a plurality of eNodeBs (eNBs). An NR base station is sometimes referred to as gNodeB or gNB. At this time, the NGRAN includes one or a plurality of gNBs. The EUTRAN may include a gNB (en-gNB) connected to a core network (EPC) in an LTE communication system (EPS). Similarly, the NGRAN may include an ng-eNB connected to a core network 5GC in a 5G communication system (5GS).

Note that, when the base station is the eNB, the gNB, or the like, the base station is sometimes referred to as 3GPP access. When the base station is a radio access point, the base station is sometimes referred to as non-3GPP access. Further, the base station may be an optical extension device called RRH (Remote Radio Head) or RU (Radio Unit). When the base station is the gNB, the base station may be a combination of the gNB-CU and the gNB-DU explained above or may be one of the gNB-CU and the gNB-DU.

Here, the gNB-CU hosts, for communication with the UE, a plurality of upper layers (for example, RRC (Radio Resource Control), SDAP (Service Data Adaptation Protocol), and PDCP (Packet Data Convergence Protocol)) in an access stratum. On the other hand, the gNB-DU hosts a plurality of lower layers (for example, RLC (Radio Link Control), MAC (Medium Access Control), and PHY (Physical layer)) in the access stratum. That is, among messages/information explained below, RRC signaling (a semi-static notification) may be generated by the gNB-CU and, on the other hand, MAC CE and DCI (a dynamic notification) may be generated by the gNB-DU. Alternatively, among RRC configurations (semi-static notifications), for example, a part of the configurations such as IE: cellGroupConfig may be generated by the gNB-DU and the remaining configurations may be generated by the gNB-CU. These configurations may be transmitted and received by an F1 interface explained below.

Note that the base station may be configured to be capable of communicating with other base stations. For example, when a plurality of base stations are a combination of eNBs or eNBs and en-gNBs, the base stations may be connected by an X2 interface. When the plurality of base stations are the combination of the gNBs or the gn-eNBs and the gNBs, the devices may be connected by an Xn interface. When the plurality of base stations are a combination of gNB-CUs and gNB-DUs, the devices may be connected by the F1 interface explained above. A message/information (for example, RRC signaling, a MAC CE (MAC Control Element), or a DCI) explained below may be transmitted among a plurality of base stations, for example, via the X2 interface, the Xn interface, or the F1 interface.

Cells provided by the base station are sometimes referred to as serving cells. The concept of the serving cells includes a PCell (Primary Cell) and an SCell (Secondary Cell). When dual connectivity is set for a UE (for example, the terminal device 40), a PCell provided by an MN (Master Node) and zero or one or more SCells are sometimes referred to as Master Cell Group. Examples of the dual connectivity include EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity.

Note that the serving cells may include a PSCell (Primary Secondary Cell or Primary SCG Cell). When dual connectivity is set for the UE, a PSCell provided by an SN (Secondary Node) and zero or one or more SCells are sometimes referred to as SCG (Secondary Cell Group). Unless specially set (for example, PUCCH on SCell), a physical uplink control channel (PUCCH) is transmitted by the PCell and the PSCell but is not transmitted by the SCell. A radio link failure is also detected by the PCell and the PSCell but is not detected (may not be detected) by the SCell. As explained above, since the PCell and the PSCell have a special role among the serving cells, the PCell and the PSCell are referred to as SpCell (Special Cell) as well.

One downlink component carrier and one uplink component carrier may be associated with one cell. In addition, a system bandwidth corresponding to one cell may be divided into a plurality of BWPs (Bandwidth Parts). In this case, one or a plurality of BWPs may be set for the UE and one BWP may be used for the UE as an active BWP. Radio resources (for example, a frequency band, numerology (subcarrier spacing), and a slot format (a Slot configuration)) that can be used by the terminal device 40 may be different for each of the cells, each of the component carriers, or each of the BWPs.

### <Configuration of the relay station>

Subsequently, a configuration of the relay station 30 is explained.

The relay station 30 is a device serving as a relay station of the base station. The relay station 30 is a type of the base station. The relay station 30 is a type of an information processing device. The relay station can also be referred to as relay base station. The relay station 30 may be a device called repeater (e. g., RF Repeater, Smart Repeater, or Intelligent Surface).

The relay station 30 is capable of performing wireless communication such as NOMA communication with the terminal device 40. The relay station 30 relays communication between the base station 20 and the terminal device 40. Note that the relay station 30 may be configured to be capable of wirelessly communicating with the other relay stations 30 and the other base stations 20. The relay station 30 may be a ground station device or may be a non-ground station device. The relay station 30 configures a radio access network RAN in conjunction with the base station 20.

Note that the relay station in the present embodiment may be a fixed device, may be a movable device, or may be a floatable device. The size of the coverage of the relay station in the present embodiment is not limited to a specific size. For example, the cell covered by the relay station may be a macro cell, a micro cell, or a small cell.

The relay station in the present embodiment is not limited to the loaded device if the function of relay is satisfied. For example, the relay machine may be mounted on a terminal device such as a smartphone, may be mounted on an automobile, a train, or a human-powered vehicle, may be mounted on a balloon, an airplane, or a drone, may be mounted on a traffic light, a sign, a street light, or the like, or may be mounted on a home appliance such as a television, a game machine, an air conditioner, a refrigerator, or a lighting fixture.

Besides, the configuration of the relay station 30 may be similar to the configuration of the base station 20 explained above. For example, like the base station 20 explained above, the relay station 30 may be a device installed in a mobile body or may be the mobile body itself. As explained above, the mobile body may be a mobile terminal such as a smartphone or a cellular phone. The mobile body may be a mobile body that moves on the land (on the ground in a narrow sense) or may be a mobile body that moves underground. Naturally, the mobile body may be a mobile body that moves on water or may be a mobile body that moves underwater. The mobile body may be a mobile body that moves inside the atmosphere or may be a mobile body that moves outside the atmosphere. The relay station 30 may be a ground station device or may be a non-ground station device. At this time, the relay station 30 may be an aircraft station or a satellite station.

The size of the coverage of the relay station 30 may be a large size such as the size of a macro cell or a small size such as the size of a pico cell like the size of the coverage of the base station 20. Naturally, the size of the coverage of the relay station 30 may be an extremely small size such as the size of a femtocell. The relay station 30 may have a beamforming capability. In this case, for the relay station 30, a cell or a service area may be formed for each beam.

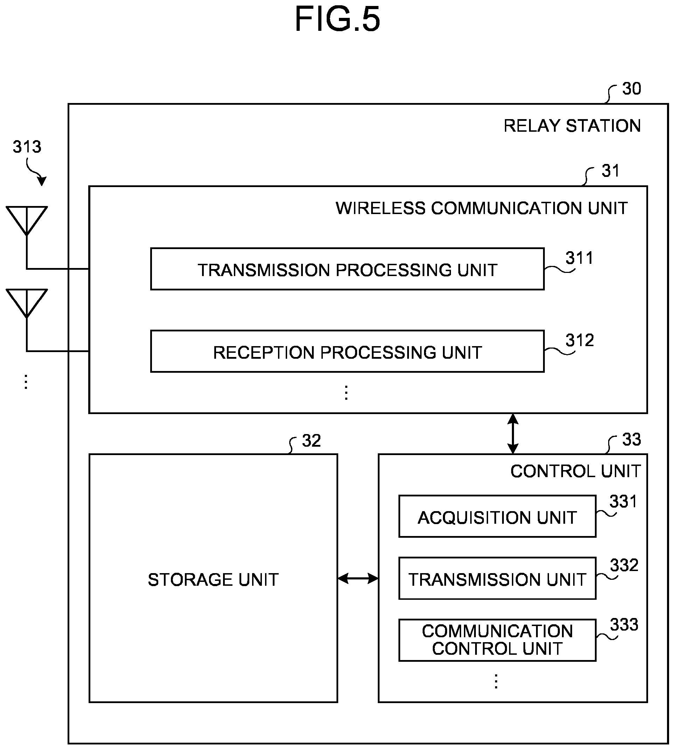

FIG. 5 is a diagram illustrating a setting example of the relay station 30 according to the embodiment of the present disclosure. The relay station 30 includes a wireless communication unit 31, a storage unit 32, and a control unit 33. Note that the configuration illustrated in FIG. 5 is a functional configuration. A hardware configuration may be different from this configuration. The functions of the relay station 30 may be implemented in a distributed manner in a plurality of physically separated components.

The wireless communication unit 31 is a wireless communication interface that wirelessly communicates with other wireless communication devices (for example, the base station 20, the terminal device 40, and other relay stations 30). The wireless communication unit 31 is adapted to one or a plurality of radio access schemes. For example, the wireless communication unit 31 is adapted to both of the NR and the LTE. The wireless communication unit 31 may be adapted to W-CDMA or cdma2000 in addition to the NR or the LTE. The wireless communication unit 31 includes a transmission processing unit 311, a reception processing unit 312, and an antenna 313. The wireless communication unit 31 may include a plurality of transmission processing units 311, a plurality of reception processing units 312, and a plurality of antennas 313. Note that, when the wireless communication unit 31 is adapted to a plurality of radio access schemes, the units of the wireless communication unit 31 can be configured individually for each of the radio access schemes. For example, the transmission processing unit 311 and the reception processing unit 312 may be individually configured by the LTE and the NR. The configurations of the transmission processing unit 311, the reception processing unit 312, and the antenna 313 are similar to the configurations of the transmission processing unit 211, the reception processing unit 212, and the antenna 213 explained above. Note that the wireless communication unit 31 may be configured to be capable of performing beamforming like the wireless communication unit 21.

The storage unit 32 is a storage device capable of reading and writing data such as a DRAM, an SRAM, a flash memory, or a hard disk. The storage unit 32 functions as storage means of the relay station 30.

The control unit 33 is a controller that controls the units of the relay station 30. The control unit 33 is implemented by a processor such as a CPU, an MPU, or a GPU. For example, the control unit 33 is implemented by the processor executing various programs stored in a storage device inside the relay station 30 using a RAM or the like as a work area. Note that the control unit 33 may be implemented by an integrated circuit such as an ASIC or an FPGA. All of the CPU, the MPU, the GPU, the ASIC, and the FPGA can be regarded as the controller. An operation of the control unit 33 may be the same as the operation of the control unit 23 of the base station 20.

As illustrated in FIG. 5, the control unit 33 includes an acquisition unit 331, a transmission unit 332, and a communication control unit 333. Blocks (the acquisition unit 331 to the communication control unit 333) configuring the control unit 33 are respectively functional blocks indicating functions of the control unit 33. These functional blocks may be software blocks or may be hardware blocks. For example, each of the functional blocks explained above may be one software module implemented by software (including a microprogram) or may be one circuit block on a semiconductor chip (a die). Naturally, each of the functional blocks may be one processor or one integrated circuit. A configuration method for the functional blocks is optional. Note that the control unit 33 may be configured by functional units different from the functional blocks explained above. Operations of the control unit 33 may be the same as the operations of the blocks of the control unit 23 of the base station 20.

Note that the relay station 30 may be an IAB relay node. The relay station 30 operates as an IAB-MT (Mobile Termination) for an IAB donor node for providing backhaul and operates as an IAB-DU (Distributed Unit) for a terminal device 40 for providing access. The IAB donor node may be, for example, the base station 20 and operates as an IAB-CU (Central Unit).

### <Configuration of the terminal device>

Subsequently, a configuration of the terminal device 40 is explained.

The terminal device 40 is a wireless communication device that wirelessly communicates with other communication devices such as the base station 20 and the relay station 30. The terminal device 40 is, for example, a mobile phone, a smart device (a smartphone or a tablet), a PDA (Personal Digital Assistant), or a personal computer. The terminal device 40 may be equipment such as a camera for business use including a communication function or may be a motorcycle, a mobile relay vehicle, or the like on which communication equipment such as an FPU (Field Pickup Unit) is loaded. The terminal device 40 may be an M2M (Machine to Machine) device or an IoT (Internet of Things) device.

Note that the terminal device 40 may be capable of performing NOMA communication with the base station 20. The terminal device 40 may be capable of using an automatic retransmission technology such as HARQ when communicating with the base station 20. The terminal device 40 may be capable of performing the sidelink communication with another terminal device 40. The terminal device 40 may also be capable of using the automatic retransmission technology such as HARQ when performing the sidelink communication. Note that the terminal device 40 may also be capable of performing NOMA communication in communication (sidelink) with the other terminal devices 40. The terminal device 40 may be capable of performing LPWA communication with other communication devices (for example, the base station 20 and the other terminal devices 40). The wireless communication used by the terminal device 40 may be wireless communication using millimeter waves. Note that the wireless communication (including the sidelink communication) used by the terminal device 40 may be wireless communication using radio waves or may be wireless communication (optical wireless) using infrared rays or visible light.

The terminal device 40 may be a mobile body device. The mobile body device is a movable wireless communication device. At this time, the terminal device 40 may be a wireless communication device installed in a mobile body or may be the mobile body itself. For example, the terminal device 40 may be a vehicle that moves on a road such as an automobile, a bus, a truck, or a motorcycle, a vehicle that moves on a rail installed on a track of a train or the like, or a wireless communication device loaded on the vehicle. Note that the mobile body may be a mobile terminal or may be a mobile body that moves on the land (on the ground in a narrow sense), underground, on water, or underwater. The mobile body may be a mobile body that moves inside the atmosphere such as a drone or a helicopter or may be a mobile body that moves outside the atmosphere such as an artificial satellite.

The terminal device 40 may be simultaneously connected to a plurality of base stations or a plurality of cells to implement communication. For example, when one base station supports a communication area via a plurality of cells (for example, pCell and sCell), the plurality of cells can be bundled and communication can be performed between the base station 20 and the terminal device 40 by a carrier aggregation (CA) technology, a dual connectivity (DC) technology, or a multi-connectivity (MC) technology. Alternatively, the terminal device 40 and the plurality of base stations 20 can communicate via cells of different base stations 20 with a coordinated multi-point transmission and reception (CoMP) technology.

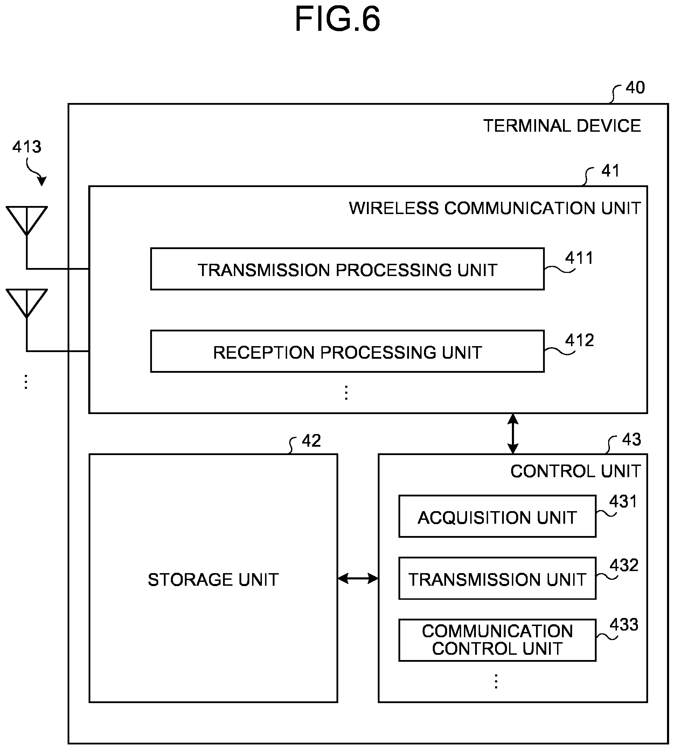

FIG. 6 is a diagram illustrating a setting example of the terminal device 40 according to the embodiment of the present disclosure. The terminal device 40 includes a wireless communication unit 41, a storage unit 42, and a control unit 43. Note that the component illustrated in FIG. 6 is a functional configuration. A hardware configuration may be different from this configuration. The functions of the terminal device 40 may be distributed and implemented in a plurality of physically separated components.

The wireless communication unit 41 is a signal processing unit for wirelessly communicating with other wireless communication devices (for example, the base station 20, the relay station 30, and the other terminal devices 40). The wireless communication unit 41 operates according to control of the control unit 43. The wireless communication unit 41 includes a transmission processing unit 411, a reception processing unit 412, and an antenna 413. The configurations of the wireless communication unit 41, the transmission processing unit 411, the reception processing unit 412, and the antenna 413 may be the same as those of the wireless communication unit 21, the transmission processing unit 211, the reception processing unit 212, and the antenna 213 of the base station 20. The wireless communication unit 41 may be configured to be capable of performing beamforming like the wireless communication unit 21. Further, like the wireless communication unit 21, the wireless communication unit 41 may be configured to be capable of transmitting and receiving spatially multiplexed signals.

The storage unit 42 is a data readable/writable storage device such as a DRAM, an SRAM, a flash memory, or a hard disk. The storage unit 42 functions as storage means of the terminal device 40.

The control unit 43 is a controller that controls the units of the terminal device 40. The control unit 43 is implemented by a processor such as a CPU or an MPU. For example, the control unit 43 is implemented by the processor executing various programs stored in a storage device inside the terminal device 40 using a RAM or the like as a work area. Note that the control unit 43 may be implemented by an integrated circuit such as an ASIC or an FPGA. All of the CPU, the MPU, the ASIC, and the FPGA can be regarded as a controller. The control unit 43 may be implemented by a GPU in addition to or instead of the CPU.

As illustrated in FIG. 6, the control unit 43 includes an acquisition unit 431, a transmission unit 432, and a communication control unit 433. Blocks (the acquisition unit 431 to the communication control unit 433) configuring the control unit 43 are respectively functional blocks indicating functions of the control unit 43. These functional blocks may be software blocks or may be hardware blocks. For example, each of the functional blocks explained above may be one software module implemented by software (including a microprogram) or may be one circuit block on a semiconductor chip (a die). Naturally, each of the functional blocks may be one processor or one integrated circuit. Note that the control unit 43 may be configured in functional units different from the functional blocks explained above. A configuration method for the functional blocks is optional. Operations of the control unit 43 may be the same as the operations of the blocks of the control unit 23 of the base station 20.

### <<Basic Operation of the communication system 1>>

The configuration of the communication system 1 is explained above. A basic operation of the communication system 1 is explained before the operation of the communication system 1 of the present embodiment is explained in detail.

### <Resource grid>

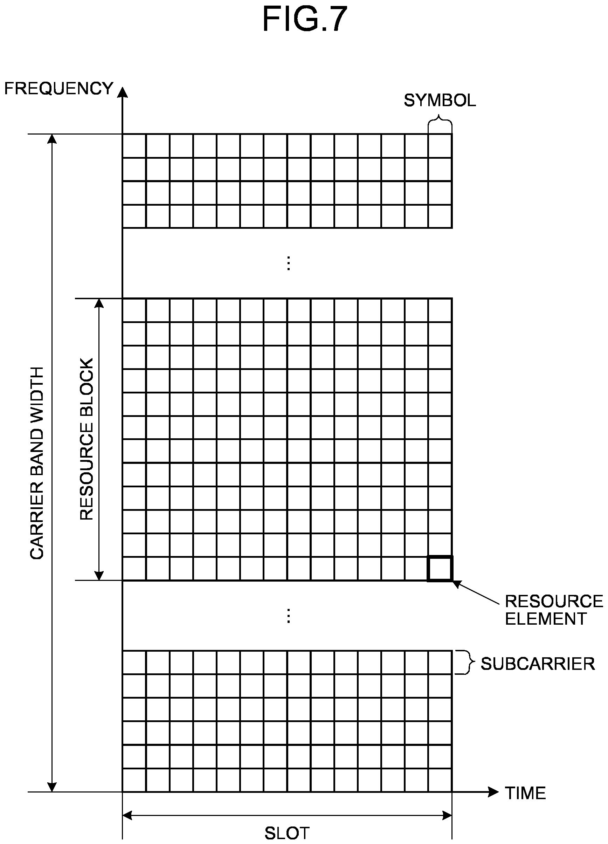

In the present embodiment, in each numerology and carrier, a transmitted physical signal or physical channel is represented by a resource grid. FIG. 7 is a diagram illustrating an example of the resource grid. The resource grid is defined by a plurality of resource elements. One resource element in a predetermined antenna port is represented by one subcarrier and one symbol. An index of a resource element in the predetermined antenna port can be represented by a combination of a subcarrier index and a symbol index.

In the present embodiment, a resource block that is a unit on a frequency axis is defined. One resource block (RB) includes twelve subcarriers continuous on the frequency axis. The resource block includes a common resource block (CRB), a physical resource block (PRB), and a virtual resource block (VRB). The common resource block is a resource block defined by a predetermined bandwidth and a predetermined numerology. In all numerologies, the common resource block starts from a point A (Point A). The frequency designated by the point A is the center of a subcarrier #0 of a common resource block #0 in all numerologies. The physical resource block is a resource block defined in a predetermined bandwidth part. The physical resource block index is numbered from 0 within the predetermined bandwidth part. The virtual resource block is a logical resource block and is used when a pre-coded signal of a PDSCH or a PUSCH is mapped to a physical resource block.

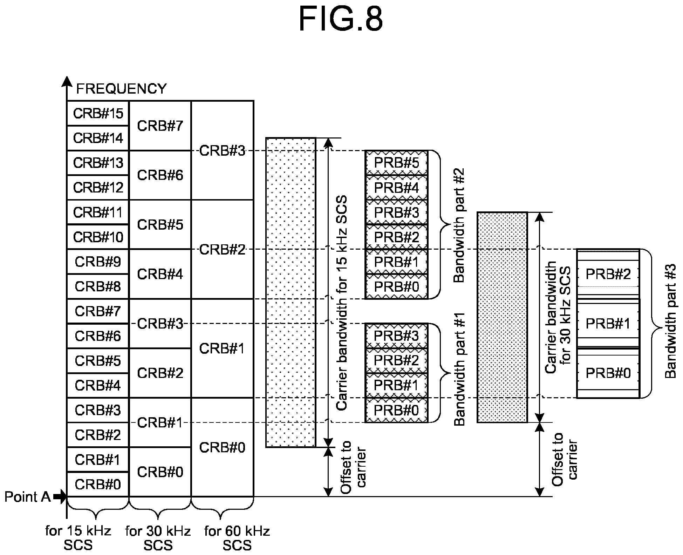

In the present embodiment, it is possible to set a subset of continuous common resource blocks referred to as bandwidth part (BWP). FIG. 8 is a diagram illustrating an example of the bandwidth part. The bandwidth part using a predetermined numerology fits in a bandwidth of a carrier defined by the numerology. Four bandwidth parts are set for each terminal device 40 at most. At a predetermined time, there is one active bandwidth part. The terminal device 40 does not expect to receive a PDSCH, a PDCCH, and a CSI-RS outside a downlink active bandwidth part. The terminal device 40 does not transmit a PUSCH and a PUCCH outside an uplink active bandwidth part. In a predetermined active cell, the terminal device 40 does not transmit an SRS outside the uplink active bandwidth part.

### <Sidelink communication>

The resource grid is explained above. Subsequently, the sidelink communication is explained.

### <Overview of the sidelink communication>

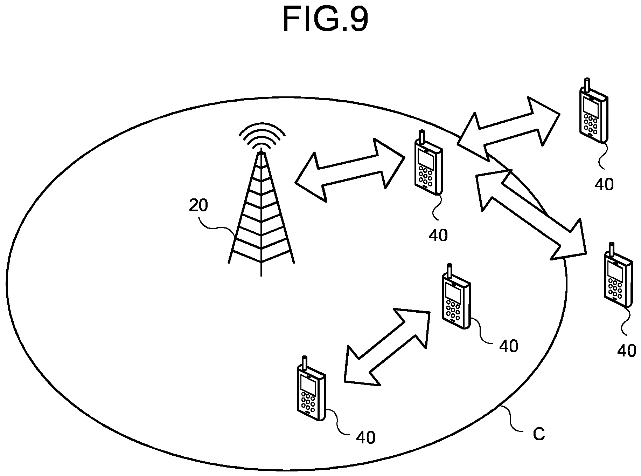

FIG. 9 is a diagram illustrating an overview of the sidelink communication. Use cases of the sidelink communication are roughly divided into two. A first case is a case in which two or more terminal devices 40 are present on the inside of a cell C configured by the base station 20. A second case is a case in which at least one terminal device 40 of the two or more terminal devices 40 is present on the inside of the cell C and the other terminal device 40 is present on the outside of the cell C. At this time, the terminal device 40 present on the inside of the cell C may perform communication with the base station 20 in addition to the sidelink communication. Accordingly, the terminal device 40 present on the inside of the cell C functions as a relay station that relays the base station 20 and the terminal device 40 present on the outside of the cell C.

Note that the presence of the terminal device 40 on the inside of the cell C means that the terminal device 40 is in a state in which the quality of a downlink signal received from the base station 20 is equal to or higher than a predetermined standard. In other words, the presence of the terminal device 40 on the outside of the cell C means that the terminal device 40 is in a state in which the quality of the downlink signal received from the base station 20 is equal to or lower than the predetermined standard. The presence of the terminal device 40 on the inside of the cell C also means that the terminal device 40 is in a state in which a predetermined downlink channel received from the base station 20 can be decoded with a predetermined probability or more. In other words, the presence of the terminal device 40 on the outside of the cell C means that the terminal device 40 is in a state in which the predetermined downlink channel received from the base station 20 cannot be decoded with the predetermined probability or more.

In the following explanation, the terminal device 40 that receives information concerning the sidelink communication from a base station and transmits a sidelink control channel is sometimes referred to as a transmission device and the other terminal devices 40 are sometimes referred to as reception devices.

### <Details of the sidelink communication>

The sidelink communication is direct communication between the terminal device 40 and a terminal device 40 different from the terminal device 40. In the sidelink communication, a resource pool is set in the terminal device 40. The resource pool is candidates of a time and a frequency resource used for transmission and reception of a sidelink. The terminal device 40 selects a resource for transmission and reception of the sidelink out of the resource pool and performs the sidelink communication. Since the sidelink communication is performed using an uplink resource (an uplink subframe or an uplink component carrier), the resource pool is also set in the uplink subframe or the uplink component carrier.

The sidelink physical channel includes a PSCCH (Physical Sidelink Control Channel), a PSSCH (Physical Sidelink Shared Channel), a PSFCH (Physical Sidelink Feedback Channel), and the like.

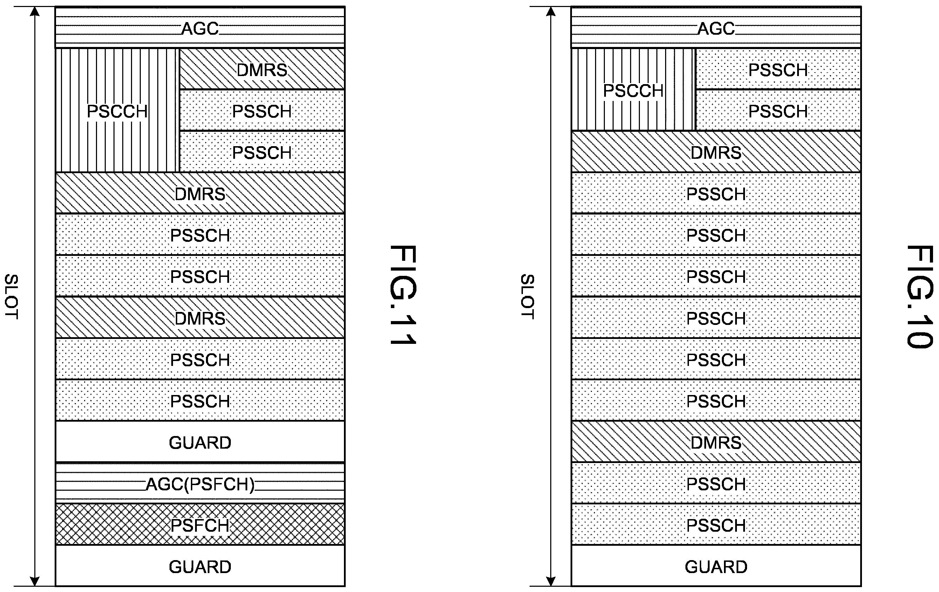

FIG. 10 and FIG. 11 are diagrams illustrating an example of a frame configuration of a sidelink. FIG. 10 is a sidelink frame configuration in the case in which a PSCCH has a 2-symbol configuration, a DMRS has a 2-symbol allocation, and there is no PSFCH. FIG. 11 is a sidelink frame configuration in the case in which the PSCCH has a 3-symbol configuration, the DMRS has a 3-symbol allocation, and there is the PSFCH.

The PSCCH is used to transmit sidelink control information (SCI). The PSCCH includes two symbols or three symbols. Mapping of information bits of the sidelink control information is defined as an SCI format. The sidelink control information includes a sidelink grant. The sidelink grant is used for scheduling the PSSCH.

The PSSCH is used to transmit sidelink data (SL-SCH: Sidelink Shared Channel). The PSSCH may also be used to transmit control information of an upper layer.

The PSFCH is used to feed back, to the transmission device, an HARQ response (HARQ-ACK or ACK/NACK) to a decoding result of the PSSCH. The PSFCH is arranged in a thirteenth symbol. The PSFCH may not be allocated resources in all slots. In that case, resources can be utilized as the PSSCH.

A frame configuration of the sidelink includes an AGC symbol. The AGC symbol may be used for AGC (Automatic Gain Control) of the receive end device. The AGC symbol is arranged in a first symbol of transmission. Specifically, the AGC symbol is arranged in the first symbol when a PSSCH is transmitted and is arranged in a twelfth symbol when a PSFCH is transmitted. The AGC symbol is generated by copying a second symbol of the transmission. That is, in the sidelink transmission, the first symbol and the second symbol of the transmission are the same. The frame configuration of the sidelink includes a guard symbol. In the sidelink, transmission and reception are switched by a guard symbol (a guard time). The guard symbol is arranged in a fourteenth symbol. Further, in a slot in which the PSFCH is transmitted, the guard symbol is arranged in an eleventh symbol as well.

A resource pool is set in the base station 20 to the terminal device 40 by an SIB or a dedicated RRC message. Alternatively, the resource pool is set by information concerning the resource pool preset in the terminal device 40. A resource pool of time is indicated by period information, offset information, and subframe bitmap information. A resource pool of a frequency is indicated by a start position of the resource block, an end position of the resource block, and the number of continuous resource blocks.

### <Resource Pool of the sidelink>

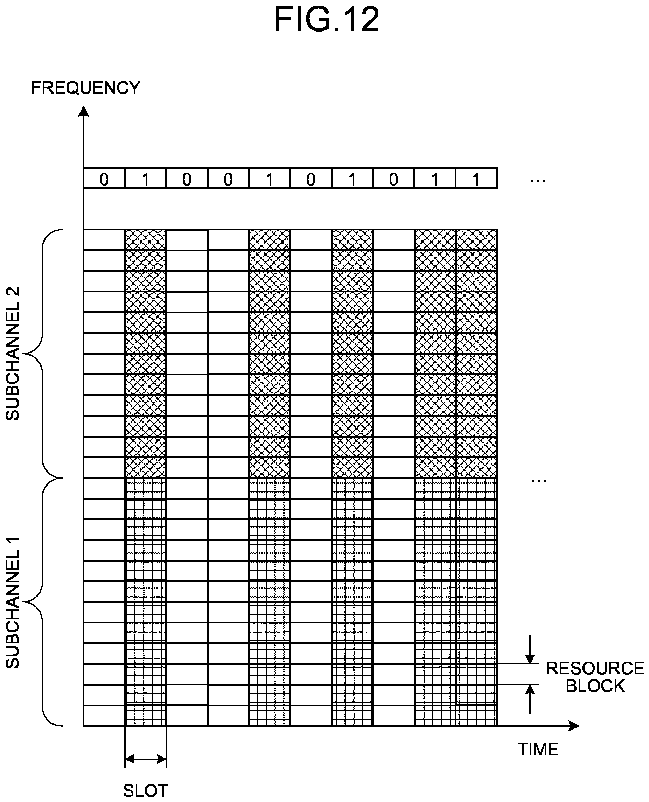

FIG. 12 is a diagram illustrating a resource pool of a sidelink. In the sidelink, a resource pool (a sidelink resource pool) is set as a resource used for transmission of a PSSCH and reception of a PSSCH. In the frequency axis, the resource pool includes one or a continuous plurality of subchannels. The subchannel includes one or a continuous plurality of PRBs (Physical Resource Blocks). The number of subchannels and the size of the subchannels are set by upper layer parameters.

The subchannel is used as a resource allocation unit of a frequency axis in the sidelink. Subchannel assignment of the sidelink transmission is determined by frequency resource assignment included in SCI. The subchannels are indexed in ascending order of frequencies

Slots set as the resource pool are indicated by a bitmap. Bits of the bitmap corresponds to slots that can be set as the resource pool of the sidelink. For example, when a value of a bit indicates 1, a slot corresponding to the bit is set as a resource pool. When if the value of the bit indicates 0, the slot corresponding to the bit is not set as a resource pool. The length of the bitmap is set by an upper layer.

A slot including an S-SS (Sidelink-Synchronization Signal)/PSBCH (Physical Sidelink Broadcast Channel) block is not set as a resource pool. A slot that does not semi-statically include a predetermined number of uplink symbols is not set as a resource pool. A reserved slot is not set as a resource pool.

Note that the device that sets the resource pool may be a device other than the base station 20. Examples of the device other than the base station 20 include a representative terminal device 40 (a primary terminal device or a master terminal device).

### <Sidelink resource allocation scheme>

As a scheme of resource allocation to the sidelink, there are a resource allocation mode 1 (Sidelink Resource allocation mode 1) and a resource allocation mode 2 (Sidelink Resource allocation mode 2). The resource allocation mode 1 is a scheme in which the base station 20 allocates a resource for the terminal device 40 to transmit data on a sidelink physical channel (a PSCCH or a PSSCH). The resource allocation mode 2 is a scheme in which the terminal device 40 itself performs sensing and selects a resource for the terminal device 40 to transmit data on the sidelink physical channel. In the following explanation, these resource allocation modes are explained in detail.

### (1) Resource allocation mode 1

In the resource allocation mode 1, when a transmission packet is generated in the terminal device 40, the base station 20 selects, out of the resource pool, a resource to be used for transmission of the packet and allocates the resource.

In the resource allocation mode 1, a resource used for sidelink transmission is designated by a dynamic grant or RRC signaling transmitted from the base station 20. Specifically, in the resource allocation mode 1, a dynamic grant, a configured grant type 1, and a configured grant type 2 are supported for PSSCH transmission and PSCCH transmission. In the sidelink dynamic grant, the PSSCH transmission is scheduled by a DCI format 3_0. In the sidelink configured grant type 1, a resource for the PSSCH transmission is allocated by the RRC signaling. In the sidelink configured grant type 2, the configured grant is activated by the DCI format 3_0. The PSSCH transmission is performed using the resource designated by the RRC signaling.

In the resource allocation mode 1, since resource allocation is performed by the base station 20 every time a transmission packet is generated, a contention frequency between sidelink communications can be reduced. On the other hand, a lot of signaling overhead between the base station 20 and the terminal device 40 is required.

### (2)Resource allocation mode 2

In the resource allocation mode 2, a resource pool is allocated to the terminal device 40 in advance. Alternatively, in the resource allocation mode 2, the resource pool is allocated by the base station 20/a network.

In the resource allocation mode 2, the terminal device 40 can select a sidelink resource in a resource selection window and reserve a future sidelink resource based on a measurement result of an interference pattern in a sensing window and a reservation status of a sidelink resource in the sensing window. By using a result of the prediction, the terminal device 40 can select and reserve a sidelink resource usable for transmission of the packet, that is, a sidelink resource predicted not to be used for transmission of other packets.

In the resource allocation mode 2, while signaling overhead between the base station 20 and the terminal device 40 is small, packet contention may occur.

In the resource allocation mode 2, resource allocation modes are classified into the following four types.
· Resource allocation mode 2(a)
· Resource allocation mode 2(b)
· Resource allocation mode 2(c)
· Resource allocation mode 2(d)

The resource allocation mode 2(a) is a mode in which the terminal device 40 autonomously selects a transmission sidelink resource. The resource allocation mode 2(b) is a mode in which the terminal device 40 assists sidelink resource selection of another transmission terminal. The resource allocation mode 2(c) is a mode in which sidelink transmission is performed by a configured grant. The resource allocation mode 2(d) is a mode in which the terminal device schedules sidelink transmission of another terminal device 40.

In the following explanation, the four types of resource allocation modes are explained in detail.

### · Resource allocation mode 2(a)

In the resource allocation mode 2 (a), when a packet is generated in the terminal device 40, the terminal device 40 autonomously selects, out of a resource pool, a sidelink resource to be used for transmission of the packet. First, the terminal device 40 that transmits the packet performs sensing in order to discover, out of the resource pool, a sidelink resource used for the transmission of the packet. Subsequently, the terminal device 40 selects a sidelink resource out of the resource pool based on a result of the sensing. Then, the terminal device 40 transmits the packet using the selected sidelink resource. At this time, the terminal device 40 reserves, according to necessity, a sidelink resource to be used for subsequent packet transmission. The resource allocation mode 2(a) can be applied to both of a semi-persistent method in which a resource is selected for a plurality of sidelink transmissions with different transport blocks and a dynamic method in which a resource is selected every time for sidelink transmissions of transports.

### · Resource allocation mode 2(b)

In the resource allocation mode 2(b), the terminal device 40 assists selection of a sidelink resource of another transmission terminal.

### · Resource allocation mode 2(c)

In the resource allocation mode 2(c), a sidelink transmission pattern is set in the terminal device 40. The terminal device 40 selects, according to the set sidelink transmission pattern, a sidelink resource to be used for transmission. The sidelink transmission pattern is defined by sizes and positions of time and frequency resources and the number of resources. A plurality of sidelink transmission patterns can be set. When only one sidelink transmission pattern is set, the terminal device 40 does not perform sensing. On the other hand, when a plurality of sidelink transmission patterns are set, the terminal device 40 performs sensing and selects a sidelink transmission pattern based on a sensing result. In out-of-coverage operation, one or a plurality of sidelink transmission patterns defined in respective sidelink resource pools are set in advance. In in-coverage operation, one or a plurality of sidelink transmission patterns defined in respective sidelink resource pools are set from the base station 20.

### · Resource allocation mode 2(d)

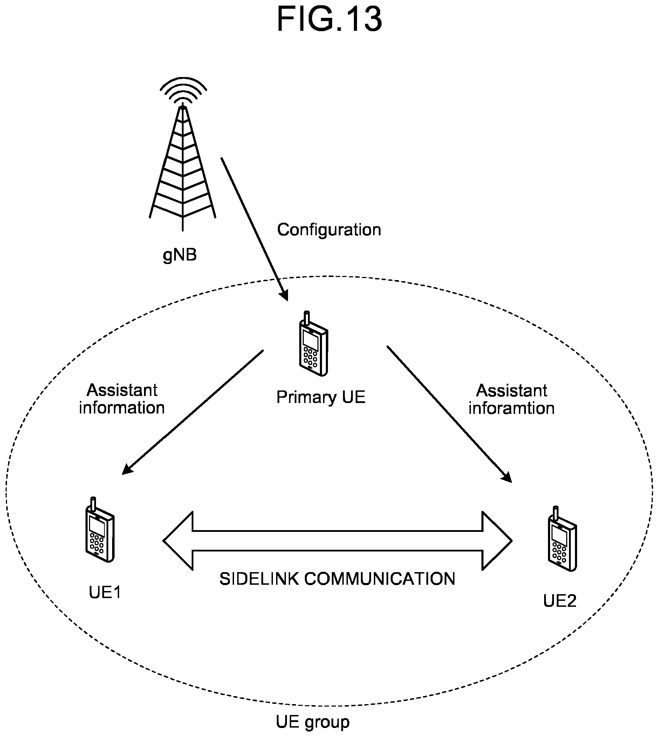

The resource allocation mode 2(d) is applied in group-based sidelink communication including three or more terminal devices 40. FIG. 13 is a diagram for explaining the resource allocation mode 2(d). In a group, a representative terminal device 40 (a master terminal device or a primary terminal device) is defined. The representative terminal device 40 reports information concerning the other terminal devices 40 (slave terminal devices, secondary terminal devices, or member terminal devices) in the group to the base station 20. The base station 20 provides resource pool setting and resource setting of the terminal devices 40 in the group via the representative terminal device 40. In the resource allocation mode 2(d), since the member terminal device 40 does not need to be directly connected to the base station 20, signal overhead of a Uu link (a communication link between the base station 20 and the terminal device 40) can be reduced. The terminal device 40 that can be the representative terminal device 40 and functions that can be provided are determined depending on the capability of the terminal device 40. The representative terminal device 40 can provide predetermined assist information to the member terminal devices 40. Examples of the assist information include resource pool setting, information concerning contention, COT sharing information, CSI, and information concerning a degree of congestion.

### <Sensing in a sidelink>

In the resource allocation mode 2, a sensing procedure is supported. SCI decoding from another terminal device 40 and/or measurement of a sidelink resource are used as sensing in a sidelink.

In the sensing by the SCI decoding, the terminal device 40 acquires information concerning the sidelink resource to be used included in SCI transmitted from the other terminal device 40. Based on the information of the SCI, the terminal device 40 determines a sidelink resource to be used for transmission while avoiding a resource that the other terminal device 40 plans to use.

In the sensing by the measurement of the sidelink resource, the terminal device 40 performs L1 (Layer 1) sidelink RSRP (Reference Signal Received Power) measurement based on sidelink DMRS (Demodulation RS). When measured RSRP is higher than a predetermined threshold, the terminal device 40 recognizes that the measured sidelink resource is used for transmission by the other terminal device 40 and determines a sidelink resource to be used for transmission while avoiding the sidelink resource.

As explained above, the terminal device 40 selects or reselects a sidelink resource based on a result of the sensing procedure explained above.

### <Use of the unlicensed band>

The sidelink communication is explained above. Subsequently, use of the unlicensed band is explained.

### <Channel access of an unlicensed channel>

To use an unlicensed channel, a wireless device (For example, the base station 20 or the terminal device 40) needs to perform channel access (channel access, medium access, or listen before talk) before transmitting a signal. Note that the unlicensed channel is a unit of a frequency band in which the channel access is performed. The channel can be expressed as a carrier, a frequency carrier, a component carrier, a cell, a frequency band, an LBT band, or the like.

In the channel access, the wireless device performs power measurement (referred to as carrier sense, sensing, or CCA (Clear Channel Assessment) as well) of the channel and compares a measured power value of the channel and a power detection threshold (an Energy detection Threshold). When the measured power value of the channel is lower than the power detection threshold, the channel is determined as clear. When the measured power value of the channel is higher than the power detection threshold, the channel is determined as busy. When the channel is determined as clear in all sensing slots, the wireless device can acquire a transmission right for the channel and transmit a signal. The transmission right of the channel can also be referred to as TxOP, transmission opportunity, COT, or a channel occupancy time. In the following explanation, the acquisition of the transmission right of the channel is sometimes referred to as acquisition of the channel.

The acquired channel may be utilized for transmission of other wireless devices. In this case, a grant (grant) is sent from the wireless device that has acquired the channel to the other wireless device. The wireless device that acquires the channel is sometimes referred to as an initiating device. A wireless device that uses a channel acquired by another wireless device is sometimes referred to as responding device.

In 3GPP, four types of LBT categories are defined. In the channel access, LBT corresponding to any one of the following LBT categories is performed.
· LBT category 1 (Cat 1 LBT)
· LBT category 2 (Cat 2 LBT)
· LBT category 3 (Cat 3 LBT)
· LBT category 4 (Cat 4 LBT)

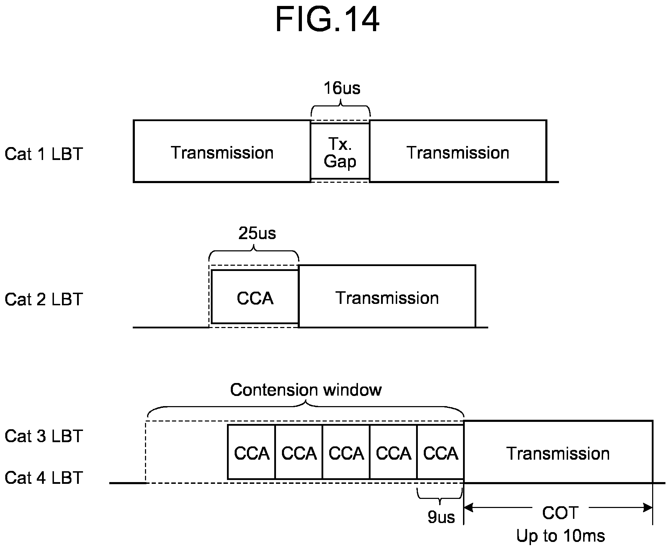

FIG. 14 is a diagram for explaining the four types of LBT categories. The LBT category 1 (Cat 1 LBT) is a category without LBT. In the LBT category 1, a gap is provided between transmission and transmission. The LBT category 2 (Cat 2 LBT) is a category in which random back-off is not performed. The LBT category 3 (Cat 3 LBT) is a category in which random back-off by a contention window having a fixed size is performed. The LBT category 4 (Cat 4 LBT) is a category in which random back-off by a contention window having a variable size is performed.

### <Channel Access Procedure of the unlicensed channel>

A channel access procedure is performed to access an unlicensed channel on which transmission is performed in the base station 20 or the terminal device 40. The channel access can also be referred to as medium access or LBT (Listen before Talk).

In a channel access procedure of load-based equipment (LBE), sensing of a channel is performed once or a plurality of times. Based on a result of the sensing, it is determined whether the channel is idle (referred to as unoccupied, available, or enable as well) or busy (referred to as occupied, unavailable, or disable as well) (vacancy determination). In the sensing of the channel, electric power of the channel in a predetermined waiting time is sensed. The "channel access/channel access procedure of the load-based device" explained above can also be referred to as a channel access procedure in dynamic channel access and dynamic channel occupancy.

Examples of a waiting time of the channel access procedure include a first waiting time (a slot), a second waiting time, a third waiting time (a defer period), and a fourth waiting time.

The slot is a unit of a waiting time of the base station 20 and the terminal device 40 in the channel access procedure. The slot is defined by, for example, 9 microseconds.

In the second waiting time, one slot is inserted at the head. The second waiting time is defined by, for example, 16 microseconds.

A defer period includes the second waiting time and a continuous plurality of slots following the second waiting time. The number of the continuous plurality of slots following the second waiting time is determined based on a priority class (a channel access priority class) used to satisfy QoS.

The fourth waiting time includes the second waiting time and one slot following the second waiting time. The fourth waiting time is defined by, for example, 25 microseconds.

The base station 20 or the terminal device 40 senses a predetermined channel in a period of a predetermined slot. When electric power detected by the base station 20 or the terminal device 40 for at least 4 microseconds within the predetermined slot period is smaller than a predetermined power detection threshold, the predetermined slot is regarded as idle. On the other hand, when the electric power is larger than the predetermined power detection threshold, the predetermined slot is regarded as busy.

The channel access procedure includes a first channel access procedure, a second channel access procedure, and a third channel access procedure. The first channel access procedure is performed using a plurality of slots and a defer period. The second channel access procedure is performed using one second waiting time or fourth waiting time. The third channel access procedure is performed using the second waiting time.

Parameters concerning the channel access are determined based on a priority class. Examples of the parameters concerning the channel access include a minimum contention window, a maximum contention window, a maximum channel occupancy time, and a value that a contention window can take. The priority class is determined by a value of a QCI (QoS class identifier) or a 5QI (5G QoS Identifier) that processes QoS (Quality of Service). Table 1 is an example of a correspondence table of parameters concerning the priority class and the channel access. Table 2 is an example of mapping of the priority class and the QCI. Table 3 is an example of mapping of the priority class and the 5QI.

**(Table 1) Example of a correspondence table of a priority class and parameters concerning channel access**

| Channel access priority class (p) | mₚ | Minimum collision window CW_{min.p} | Maximum collision window CW_{max.p} | Maximum channel occupancy time T_{m cot.p} | Value that a collision window CWₚ can take |
|---|---|---|---|---|---|
| 1 | 1 | 3 | 7 | 2ms | {3,7} |
| 2 | 1 | 7 | 15 | 3ms | {7,15} |
| 3 | 3 | 15 | 63 | 8 or 10ms | {15,31,63} |
| 4 | 7 | 15 | 1023 | 8 or 10ms | {15,31,63,127,255,511,1023 } |

**(Table 2) Example of mapping of the priority class and QCI**

| Channel access priority class (p) | QCI |
|---|---|
| 1 | 1, 3, 5, 65, 66, 69, 70 |
| 2 | 2, 7 |
| 3 | 4, 6, 8, 9 |
| 4 | Other than the above |

**(Table 3) Example of mapping of the priority class and 5QI**

| Channel access priority class (p) | 5QI |
|---|---|
| 1 | 1, 3, 5, 65, 66, 67, 69, 70, 79, 80, 82, 83 |
| 2 | 2, 7, 71 |
| 3 | 4, 6, 8, 9, 72, 73, 74, 76 |
| 4 | - |

### <Details of the first channel access procedure>

The first channel access procedure (a type 1 channel access procedure) is classified into an LBT category 3 or an LBT category 4. In the first channel access procedure, a procedure described below is performed.

### Step (0):

Sensing of a channel is performed a defer period. If the channel is idle in a slot in the defer period, the communication device advances the processing to step (1). Otherwise, the communication device advances the processing to step (6).

### Step (1):

The communication device acquires an initial value of a counter. A value that the initial value of the counter can take is an integer from 0 to a contention window CW. The initial value of the counter is determined at random according to a uniform distribution. The communication device sets the initial value of the counter in a counter N and advances the processing to step (2).

### Step (2):

When the counter N is larger than 0 and subtraction of the counter N is selected, the communication device subtracts 1 from the counter N. Thereafter, the communication device advances the processing to step (3).

### Step (3):

The communication device adds a period of a slot and stays on standby. In the additional slot, the communication device executes channel sense. When the additional slot is idle, the communication device advances the processing to step (4). Otherwise, the communication device advances the processing to step (5).

### Step (4):

When the counter N is 0, the communication device stops this procedure. Otherwise, the communication device advances the processing to step (2).

### Step (5):

The communication device adds a defer period and stays on standby. The communication device executes channel sense until it is detected that any one slot included in the additional defer period is busy or it can be detected that all slots included in the additional defer period are idle. Thereafter, the communication device advances the processing to step (6).

### Step (6):

When it is sensed that the channel is idle in all of the slots included in the additional defer period, the communication device returns the processing to step (4). Otherwise, the communication device returns the processing to step (5).

After stopping step (4), the communication device executes transmission including transmission of data such as a PDSCH and a PUSCH in the channel.

After step (4) is stopped, transmission may not be performed in the channel. In this case, thereafter, when the channel is idle in all of the slot and the defer period immediately before transmission, the communication device may perform transmission without executing the procedure explained above. On the other hand, when the channel is not idle in either the slot or the defer period, the communication device returns the processing to step (1) after it is sensed that the channel is idle in all of slots in the additional defer period.

### <Details of the second channel access procedure>

The second channel access procedure (a type 2 channel access procedure) is classified into the LBT category 2. In the second channel access procedure, transmission may be performed immediately after the channel is regarded as idle as a result of sensing for at least the second waiting time or the fourth waiting time. On the other hand, transmission is not performed when the channel is regarded as not idle as a result of sensing for at least the second waiting time or the fourth waiting time. The second channel access procedure is applied when a transmission interval is 16 microseconds or 25 microseconds.

The second channel access procedure in which the fourth waiting time is used is referred to as type 2A channel access procedure. The second channel access procedure in which the second waiting time is used is referred to as type 2B channel access procedure.

### <Details of the third channel access procedure>

The third channel access procedure (a type 2C channel access procedure) is classified into the LBT category 1. In the third channel access procedure, the channel is not sensed before transmission. The third channel access procedure is applied when the transmission interval is 16 microseconds or less.

### <Contention window adaptation procedure>

In the LBT category 4, a contention window adaptation procedure is performed.

A contention window CW used in the first channel access procedure is determined based on a contention window adaptation procedure. A value of the contention window CW is retained for each priority class. The contention window CW takes a value between a minimum contention window and a maximum contention window. The minimum contention window and the maximum contention window are determined based on the priority class.

The adjustment of the value of the contention window CW is performed before step (1) of the first channel access procedure. When a ratio of NACKs is higher than a threshold in HARQ responses corresponding to a shared channel of a reference HARQ process in at least a reference subframe (a reference slot or a reference section) of the contention window adaptive procedure, the value of the contention window CW is increased. Otherwise, the value of the contention window CW is set to the value of the minimum contention window. For example, 90% is set as the threshold. The value of the contention window CW is increased, for example, based on a formula CW=2* (CW+1)-1.

The reference section is defined as a section from the beginning of an occupied channel to the end of a first slot including the at least one unicast PDSCH or the end of a first transmission burst including at least one unicast PDSCH.

### <Details of a channel access procedure in downlink>

When performing downlink transmission including transmission of a PDSCH, a PDCCH, and/or an EPDCCH (Enhanced PDCCH) in an unlicensed channel, the base station 20 accesses the channel based on the first channel access procedure and performs the downlink transmission.

On the other hand, when performing downlink transmission including transmission of a DRS (Discovery RS) or a DS (Discovery Signal) or a Discovery Burst but not including a PDSCH in an unlicensed channel, the base station 20 accesses the channel based on the second channel access procedure and performs the downlink transmission. Note that a period of the downlink transmission is preferably shorter than 1 millisecond.

### <Details of a channel access procedure in uplink>

In an unlicensed channel, when it is instructed to perform the first channel access procedure with an uplink grant for scheduling a PUSCH, the terminal device 40 performs the first channel access procedure before uplink transmission including transmission of the PUSCH.

When it is instructed to perform the second channel access procedure with an uplink grant for scheduling a PUSCH, the terminal device 40 performs the second channel access procedure before uplink transmission including transmission of the PUSCH.

For uplink transmission not including a PUSCH but including an SRS, the terminal device 40 performs the second channel access procedure before the uplink transmission.

When the end of the uplink transmission indicated by the uplink grant is within an uplink duration (UL duration), the terminal device 40 performs the second channel access procedure before the uplink transmission irrespective of a procedure type indicated by the uplink grant.

When the uplink transmission continues at an interval of the fourth waiting time after the end of downlink transmission from the base station, the terminal device 40 performs the second channel access procedure before the uplink transmission.

### <Channel access procedure of the NR>

In a channel access procedure in an unlicensed channel using the NR, the communication device (a transmission station) can perform non-beam-formed channel sensing and beam-formed channel sensing.

The non-beam-formed channel sensing is channel sensing by reception in which directivity is not controlled or channel sensing having no direction information. The channel sensing not having direction information is, for example, channel sensing in which measurement results are averaged in all directions. The communication device may not recognize directivity (an angle and a direction) used in the channel sensing.

The beam-formed channel sensing is channel sensing by directivity controlled reception or channel sensing having direction information. That is, the beam-formed channel sensing is channel sensing in which a reception beam is directed in a predetermined direction. A communication device having a function of performing the beam-formed channel sensing can perform one or more times of channel sensing using different directivities.

By performing the beam-formed channel sensing, an area detected by sensing is narrowed. Accordingly, the communication device can reduce a frequency of detecting a communication link that does not cause interference and can reduce an exposed terminal problem.

### <Channel access of frame-based equipment (FBE)>

In a channel access procedure of frame-based equipment (FBE), sensing of a channel is performed once before transmission. Based on a result of the sensing, it is determined whether the channel is idle (idle, unoccupied, available, or enable) or busy (busy, occupied, unavailable, or disable) (vacancy determination). In the sensing of the channel, electric power of the channel in a predetermined waiting time is sensed. Note that the "channel access/channel access procedure of the frame-based equipment" explained above can also be referred to as semi-static channel access or channel access procedure in semi-static channel occupancy. The "channel access" explained above can also be referred to as LBT (Listen before Talk).

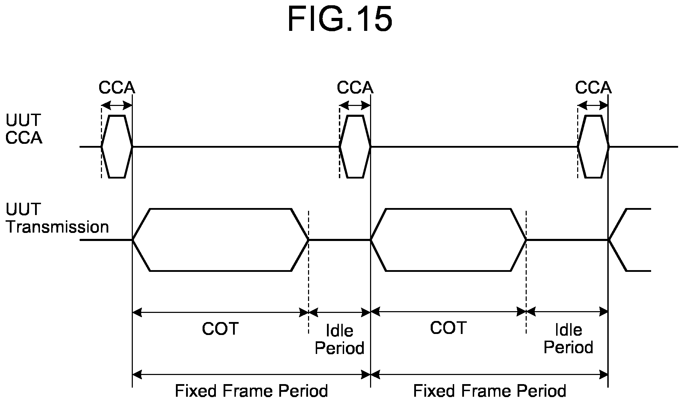

FIG. 15 is a diagram illustrating a frame-based configuration of the frame-based equipment. A transmission and/or reception configuration used for the frame-based equipment has periodic timing referred to as fixed frame period.

The fixed frame period is set in channel access of the frame-based equipment. The fixed frame period is set to 1 millisecond to 10 milliseconds. The fixed frame period can be changed only once in 200 milliseconds.

In the channel access of the frame-based equipment, the equipment performs sensing of a channel immediately before starting transmission from the head of the fixed frame period. The equipment performs the sensing once using one slot consisting of 9 microseconds or less. As a result of the sensing the channel, when a power value is larger than a predetermined power detection threshold, the channel is considered to be busy. On the other hand, when the power value is smaller than the predetermined power detection threshold, the channel is clear and the equipment can perform the transmission. The equipment can perform transmission during a channel occupancy time (COT). The equipment can perform a plurality of transmissions without performing the sensing if it is within the channel occupancy time and a gap among the plurality of transmissions is 16 microseconds or less. On the other hand, when the gap among the plurality of transmissions exceeds 16 microseconds, the equipment needs to perform additional channel sensing. In the additional channel sensing, similarly, the sensing is performed once using one slot.

The channel occupancy time in the channel access of the frame-based equipment does not exceed 95% of the fixed frame period. An idle period in the channel access of the frame-based equipment is equal to or larger than 5% of the fixed frame period. The idle period is 100 microseconds or more.

Transmission of a response (ACK/NACK or HARQ-ACK) to the transmission from the equipment may be performed in the channel occupancy time.

### <COT(Channel Occupancy Time)>

In an operation of the unlicensed band, a wireless communication device (hereinafter referred to as communication device) performs LBT before signal transmission. When it is determined as a result of the LBT that a channel is clear, the channel can be occupied for a predetermined time. The predetermined time in which the channel can be occupied after the LBT is referred to as COT (Channel Occupancy Time). In the LBE, the COT is defined to fit in a maximum channel occupancy time (Maximum COT) defined in Table 1 described above. In the FBE, the COT is defined to fit in 95% of the fixed frame period. The COT acquired by the communication device may be used for transmission of a reception-side communication device (hereinafter referred to as reception device). A communication device (a responding device) different from the communication device (an initiating device) that has acquired the COT transmitting a signal using the COT is referred to as COT sharing. When the COT sharing is performed, other communication devices also need to recognize the COT and a COT length.

The COT length of the COT acquired by the base station 20 (hereinafter referred to as base station start COT or base station acquisition COT) is notified to the terminal device 40 using the DCI format 2_0. The terminal device 40 recognizes the length of the base station start COT based on a COT length indicator included in the DCI format 2_0.

The terminal device 40 can implicitly recognize the COT from PDSCH scheduling received from the base station 20. The terminal device 40 can implicitly recognize the COT from a downlink physical signal (DMRS for SS/PBCH Block, CSI-RS, or PDCCH) received from the base station 20.

The COT length of the COT(hereinafter referred to as terminal device start COT or a terminal device acquisition COT) acquired by the terminal device 40 is notified to the base station 20 using CG-UCI. The base station 20 recognizes the length of the start COT of the terminal device 40 based on COT sharing information included in the CG-UCI.

### <Channel access procedure of a third party device start COT>

In the unlicensed band, generally, a transmission-side communication device (hereinafter referred to as transmission device) acquires a COT. However, it is also possible that a reception device acquires a COT and shares the acquired COT with the transmission device. On the other hand, it is also assumed that a third party communication device (hereinafter referred to as third device), which is neither the transmission device nor the reception device, acquires a COT and shares the acquired COT with the transmission device and the reception device. The channel access procedure of the third party device start COT (the third party device acquisition COT) is a channel access procedure effective for reducing processing and reducing power consumption of the wireless communication device because the transmission device and the reception device do not need to execute channel access.

The third party device is a communication device corresponding to one or a plurality of definitions described below.
· The third party device is a communication device not directly involved in transmission and reception of communication.
· The third party device is a communication device that does not perform data transmission and reception in a link (uplink, downlink, or sidelink) between other two or more communication devices.
· The third party device is a communication device that provides, concerning a link between the other two or more communication devices, predetermined control information (for example, assistance information (assistance information)) to the one or more communication devices.

The third party device may be the base station 20 or may be the terminal device 40. The third party device is preferably a communication device that controls the other two or more communication devices. As a representative example of the third party device, a base station, a primary terminal device, or a master terminal device is assumed.

The third-party device start COT may be shared by another base station 20 or may be shared by the terminal device 40. The third-party device start COT may be used for downlink simultaneous transmission (Coordinated Multipoint transmission: CoMP or multi-TRP transmission) of a plurality of base stations 20 or may be used for the sidelink communication between two or more terminal devices 40.

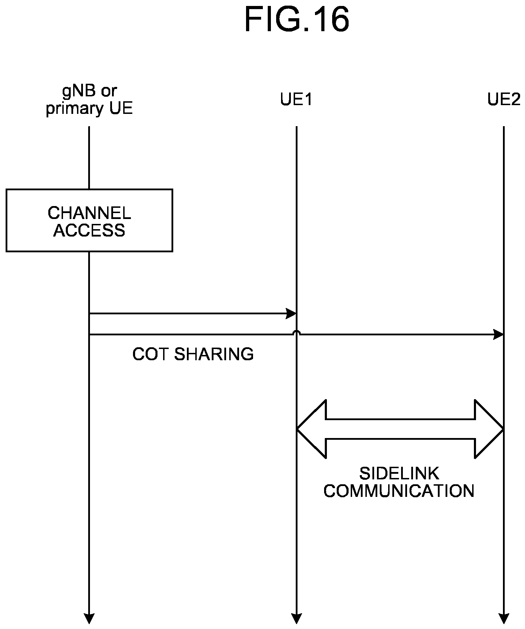

FIG. 16 is an example of a procedure for sharing a COT acquired by the third party device. A third party device (for example, the base station, the primary terminal device, or the master terminal device) not involved in the sidelink communication executes channel access before the sidelink communication between UE1 and UE2 and acquires a COT. The UE1 and the UE2 are, for example, terminal devices 40. After acquiring the COT, the third party device transmits, in downlink or sidelink, information indicating COT sharing to the UE1 and/or the UE2. The UE1 and/or the UE2, which has received the COT sharing information, carries out the sidelink communication in the shared COT.

In sharing of the third-party device start COT, restrictions may be provided for communication and a communication device that can be shared. As examples of restrictions, examples explained below (an example 1 to an example 8) are recalled.

### (Restriction example 1)

The terminal device 40 capable of performing COT sharing is determined by a positional relation between the third party device that has acquired the COT and the terminal device 40 that carries out the sidelink communication. For example, the terminal device 40 that can carry out the sidelink communication using a COT acquired by the third party device is the terminal device 40 present within a predetermined range from the third party device. The terminal device 40 present within the predetermined range is at least a transmission device.

### (Restriction example 2)

The terminal device 40 capable of performing COT sharing is determined by reception power received by the terminal device 40 that carries out the sidelink communication from the third party device that has acquired the COT. For example, RSRP and RSSI are referred to as the reception power. For example, the terminal device 40 in which reception power of a signal from the third party device that has acquired the COT is higher than a predetermined value may carry out the sidelink communication using the COT acquired by the third party device.

### (Restriction example 3)

The terminal devices 40, COTs of which are shared from the third party device are only member terminals belonging to the same terminal device group. The terminal devices 40 belonging to the terminal device group may be set from the base station 20, may be set based on a zone, or may be terminal devices that receive data transmitted by group-cast.

### (Restriction example 4)

The terminal devices 40, COTs of which are shared from the third party device, are only the terminal devices 40 present in the same zone. A zone (a geographic zone) is an area calculated from geographic coordinates. When two terminal devices 40 are present in the same zone, the two terminal devices 40 can be regarded as being located within a predetermined distance.

### (Restriction example 5)

The terminal devices 40, COTs of which are shared from the third party device, are only the terminal devices 40 connected to the same cell (the base station 20). For example, when the terminal device 40 and the terminal device 40 to be a communication partner of the terminal device 40 in the sidelink communication are connected to the same base station 20, the terminal devices 40 share COTs with the base station 20 for the sidelink communication.

### (Restriction example 6)

The maximum length of a COT may be restricted. Specifically, a maximum time in which communication is possible with a COT shared from the third party device may be restricted to be shorter than the maximum length of an acquired COT.

### (Restriction example 7)

A physical signal, a physical channel, a type of data transmission, and/or a type of data (for example, a packet type) that can be transmitted through the COT sharing are restricted. As a specific example, the physical channel that can be transmitted through the COT sharing from the third party device is a physical channel that carries control information (SCI or HARQ-ACK) such as a PSSCH and/or a PSFCH. As another specific example, the type of data transmission that can be transmitted by the COT sharing from the third party device is broadcast or group-cast. As another specific example, the type of data that can be transmitted by the COT sharing from the third party device is data indicated as high priority by physical layer (L1 or layer 1) priority.

### (Restriction example 8)

When a COT is shared from the third party device, transmission power of the sidelink communication may be restricted. For example, an upper limit of the transmission power of the sidelink communication at the time when the COT is shared from the third party device is lower than an upper limit of the transmission power of the sidelink communication at the time when the terminal device acquires the COT. The upper limit of the transmission power of the sidelink communication at the time when the COT is shared from the third party device is indicated by control information (DCI or SCI) including RRC signaling or COT sharing information from the third party device. As a specific example of the upper limit of the transmission power of the sidelink communication, transmission power assumed in power detection at the time when the COT is acquired is the upper limit.

Note that the terminal device 40 relating to the restrictions explained above is a transmission terminal that transmits information at least in sidelink. Note that the restrictions explained above may be further applied to a reception terminal (a unicast reception terminal or a group-cast reception terminal).

Note that one or more of the restrictions explained above may be applied in combination.

### <Occupied channel bandwidth>

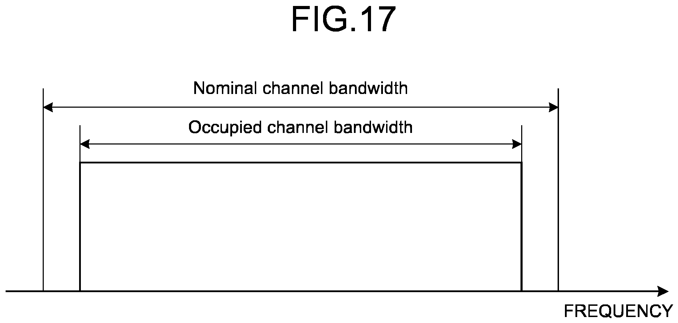

A nominal channel bandwidth and an occupied channel bandwidth (OCB) are defined in the unlicensed band (for example, 5 GHz band). FIG. 17 is a diagram illustrating a definition of a channel bandwidth. The nominal channel bandwidth is required to be set at a bandwidth determined by a law. For example, in European countries, the nominal channel bandwidth is required to be set at 5 MHz or higher. In Japan, the nominal channel bandwidth is required to be set at 20, 40, 80, or 160 MHz. The occupied channel bandwidth is a bandwidth occupied by transmission of one signal. The occupied channel bandwidth is defined as a bandwidth including 99% of electric power of one transmission signal.

In the unlicensed band such as a 5 GHz band or a 6 GHz band, the law requires that the occupied channel bandwidth be 80% or more of the nominal bandwidth. For example, when the nominal channel bandwidth is 20 MHz, the occupied channel bandwidth is required to be 16 MHz or more.

Furthermore, in the unlicensed band, an LBT bandwidth is defined as a bandwidth for executing LBT. The LBT bandwidth is preferably set to be the same as a nominal bandwidth.

### <Interlaced waveform>

To satisfy a requirement of the occupied channel bandwidth, the transmission device has to transmit one signal in a wide band. On the other hand, when a signal is transmitted in the wide band, a large amount of transmission power is required to satisfy a predetermined reception power density. For that reason, the transmission of the signal in the wide band causes an increase in power consumption of the terminal device 40. In addition, when one signal occupies a lot of bandwidths, it is difficult to implement frequency division multiple access (FDMA). Therefore, the transmission of the signal in the wide band also causes deterioration in frequency utilization efficiency.

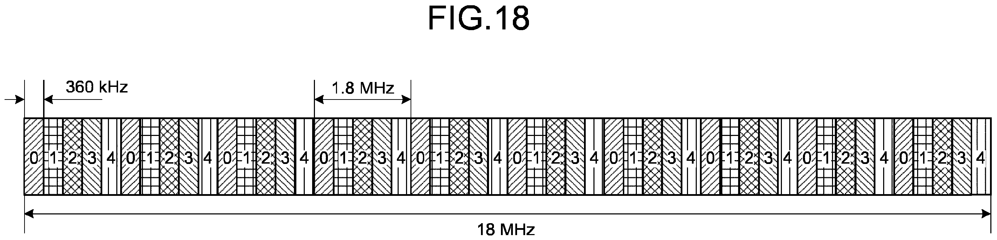

In order to solve the problems described above, an interlaced waveform is adopted for an uplink signal in NR-U (NR-Unlicensed). The interlaced waveform is also called interlaced mapping. The interlaced waveform is a type of discontinuous mapping. In the interlaced waveform, transmission signals are uniformly arranged at predetermined frequency intervals. FIG. 18 is a diagram illustrating an example of an interlaced waveform at the time when a subcarrier spacing (SCS) is 30 kHz. When the SCS is 30 kHz, in the interlaced waveform, each RB is allocated to uplink transmission of one terminal device 40 at intervals of 5 RBs. In the example illustrated in FIG. 18, 10 RBs are allocated to the terminal device 40 at intervals of 5 RBs. Uplink transmissions of different terminal devices can be allocated to resources having different numbers. In the example illustrated in FIG. 18, uplink transmissions of five terminal devices 40 can be allocated by FDMA.

The interlaced waveform is supported at, for example, an SCS of 15 kHz or 30 kHz.

Note that the terminal device 40 may be capable of performing both of the sidelink communication using a continuous waveform and the sidelink communication using the interlaced waveform.

### <Narrow band frequency hopping>

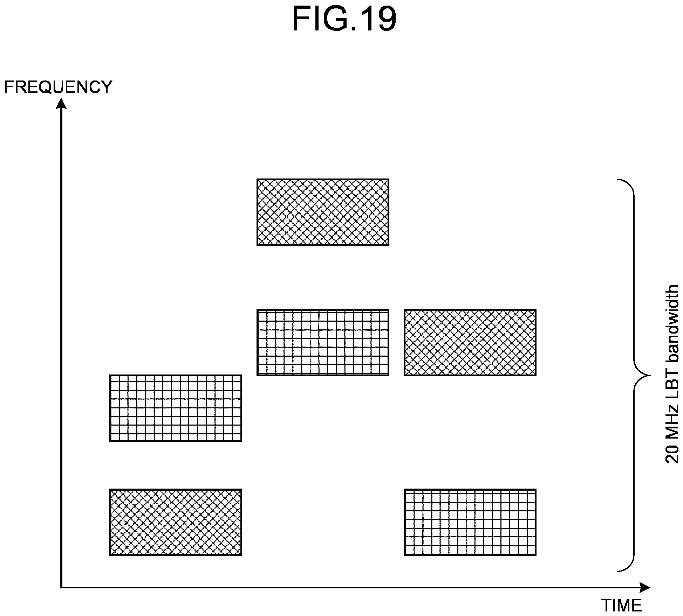

In the unlicensed band, narrow band frequency hopping (NBFH) is exemplified as an access scheme capable of transmitting a signal without satisfying the requirement of the occupied channel bandwidth. In the narrow band frequency hopping, the transmission device performs transmission using a narrow band narrower than the occupied channel bandwidth. However, when transmission in the used narrow band exceeds a fixed time, the band in use has to be shifted to a different narrow band. FIG. 19 is a diagram illustrating an example of frequency hopping. In the example illustrated in FIG. 19, two signals are transmitted by the narrow band frequency hopping. When a transmission time has exceeded a predetermined time, the transmission device shifts the band in use to a narrow band different from the narrow band currently in use and continues the transmission.

The narrow band to which the band in use is shifted is, for example, a band selected at random. The narrow band to which the band in use is shifted may be a band designated by a pattern generated in a predetermined sequence (for example, an M-sequence and a Gold sequence).

A communication device that carries out the narrow band frequency hopping does not have to perform LBT before transmission. In other words, the communication device that performs communication in the unlicensed band may carry out the narrow band frequency hopping instead of not performing the LBT.

When the narrow band frequency hopping is carried out, it is desirable that transmission power is restricted. Specifically, the maximum transmission power of the communication device that carries out the narrow band frequency hopping may be lower than the maximum transmission power of the communication device that carries out the LBT.

In narrow band frequency hopping, narrow band signals are different on the time axis. Therefore, this is regarded as randomized interference for communication to be interfered. For that reason, when the narrow band frequency hopping is used, it is possible to reduce a burst error of communication to be interfered compared with when the narrow band is continuously used on the time axis. In communication using the narrow band frequency hopping, since frequency hopping is carried out, a frequency diversity gain can be obtained. The communication using the narrow band frequency hopping is suitable for low power consumption communication because a bandwidth used for communication is narrow. For that reason, the narrow band frequency hopping is preferably applied to a terminal device with low power consumption such as a wearable device.

The narrow band frequency hopping is applicable to the unlicensed band of 2.4 GHz or 6 GHz. Naturally, application of the narrow band frequency hopping to another shared band (shared spectrum) and an unlicensed band (unlicensed spectrum) is not excluded.

### <<Operation of the communication system>>

The basic operation of the communication system 1 is explained above. Subsequently, an operation of the communication system 1 of the present embodiment is explained in detail.

When using the unlicensed band, the terminal device 40 has to transmit a signal to satisfy the requirement of the occupied channel bandwidth. Therefore, in order to implement the sidelink communication using the unlicensed band, the terminal device 40 has to satisfy not only the requirement of the sidelink communication but also the requirement of the occupied channel bandwidth.

Therefore, in the present embodiment, the communication system 1 allocates frequency resources to the terminal device 40 to satisfy the requirement of the occupied channel bandwidth in an operation of the sidelink communication using the unlicensed band. For example, the transmission unit 232 of the base station 20 in the present embodiment transmits information of a resource pool including one or a plurality of sidelink BWPs to the terminal device 40 that performs the sidelink communication using the unlicensed band.

Here, a communication device that transmits the information of the resource pool to the terminal device 40 is not limited to the base station 20 and may be, for example, the relay station 30. The communication device that transmits the information of the resource pool to the terminal device 40 may be the management device 10 or may be another terminal device 40. The other terminal device 40 is, for example, a primary UE or a UE serving as a communication partner of the sidelink communication.

The acquisition unit 431 of the terminal device 40 acquires the information of the resource pool. The communication control unit 433 of the terminal device 40 determines sidelink transmission resources based on the information of the resource pool. Then, the communication control unit 433 of the terminal device 40 performs the sidelink communication using the transmission resources. The sidelink communication means, for example, transmission or reception of data by a sidelink physical channel (for example, a PSCCH, a PSSCH, or a PSFCH).

The information of the resource pool acquired by the terminal device 40 is information concerning a set of resources that the terminal device 40 can use for the sidelink communication. In order for the terminal device 40 to transmit a signal to satisfy the requirement of the occupied channel bandwidth, the information of the resource pool needs to be configured to be able to satisfy the requirement of the occupied channel bandwidth.

In the following explanation, setting examples of the source pool are explained separately for three cases (1) to (3) described below.
(1) A case in which the sidelink communication is performed in the continuous waveform
(2) A case in which the sidelink communication is performed in the interlaced waveform
(3) A case in which a plurality of waveforms are mixed

In the unlicensed band, an LBT bandwidth is defined as a bandwidth in which LBT is executed. In the present embodiment, the LBT bandwidth is assumed to be, for example, 20 MHz. Note that a value of the LBT bandwidth can be selected according to laws of countries. For example, the value of the LBT bandwidth may be any value of 5 MHz or more or may be a value selected out of 20, 40, 80, and 160 MHz. The notation (20 MHz) of the value of the LBT bandwidth that appears in the following explanation can be changed as appropriate.

### <Case in which the sidelink communication is performed in the continuous waveform>

First, a setting example of the resource pool in the case in which the terminal device 40 performs the sidelink communication in the continuous waveform is explained.

### <Setting example 1-1>

First, a setting example of a resource pool serving as a basic form is explained.

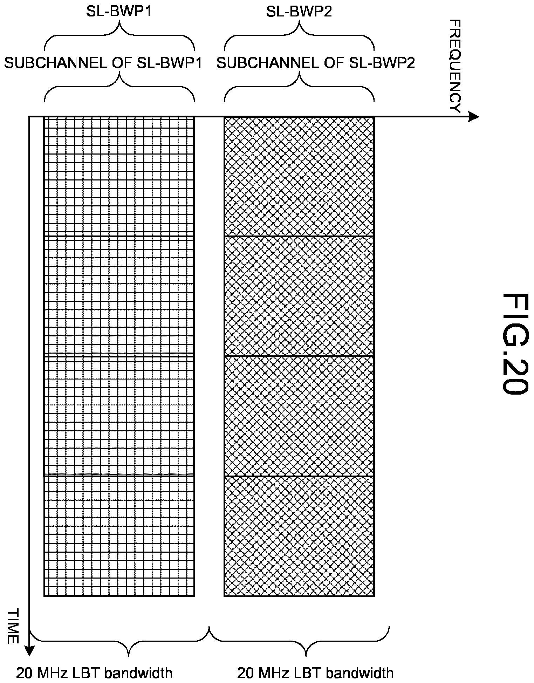

FIG. 20 is a diagram illustrating an example of setting of resource pools in the case in which the terminal device 40 performs the sidelink communication in the continuous waveform. The setting (hereinafter referred to as setting example 1-1) illustrated in FIG. 20 is applied to, for example, transmission or reception of a PSCCH, a PSSCH, or a PSFCH.

The resource pool of the setting example 1-1 includes one or a plurality of sidelink BWPs. In the example illustrated in FIG. 20, the resource pool includes two sidelink BWPs (Sidelink Bandwidth Parts). The sidelink BWP (hereinafter referred to as SL-BWP as well) is a resource that the terminal device 40 uses for sidelink communication. In the following explanation, the sidelink BWP is sometimes referred to as SL-BWP.

In the setting example 1-1, one sidelink BWP (a first sidelink BWP) includes one subchannel for the continuous waveform. That is, in the setting example 1-1, a parameter sl-NumSubchannel indicating the number of subchannels is always 1. The first sidelink BWP is set at 20 MHz such that one subchannel configuring the first sidelink BWP corresponds to one LBT bandwidth.

The terminal device 40 selects one or a plurality of subchannels as sidelink transmission resources from the resource pool. Then, the terminal device 40 performs the sidelink communication using the selected transmission resources.

According to this setting example, a bandwidth of a resource block to which a PSCCH/a PSSCH is allocated is equivalent to the LBT bandwidth. Therefore, it is easy to satisfy the requirement of the occupied channel bandwidth in the continuous waveform.

### <Setting example 1-2>

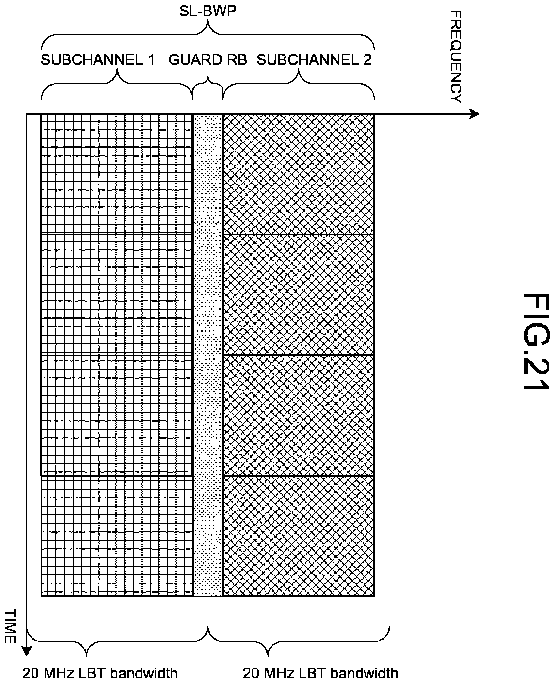

In the setting example 1-1, one sidelink BWP includes one subchannel. However, a plurality of subchannels may be included in one sidelink BWP. FIG. 21 is a diagram illustrating another example of the setting of the resource pool in the case in which the terminal device 40 performs the sidelink communication in the continuous waveform. The setting (hereinafter referred to as setting example 1-2) illustrated in FIG. 21 is applied to, for example, transmission or reception of a PSCCH, a PSSCH, or a PSFCH.

The resource pool of the setting example 1-2 includes one or a plurality of sidelink BWPs. In the example illustrated in FIG. 21, the resource pool includes one sidelink BWP. In the setting example 1-2, one sidelink BWP (a second sidelink BWP) includes a plurality of subchannels for the continuous waveform. In the example illustrated in FIG. 21, one sidelink BWP includes two subchannels for the continuous waveform. The second sidelink BWP is set such that each of a plurality of subchannels configuring the second sidelink BWP corresponds to one LBT bandwidth.

In order to suppress the influence of power leakage from adjacent channel bandwidths with out-of-band radiation, a guard band (Guard-Band) is provided between the adjacent LBT bandwidths. This guard band may be an intra-cell guard band (in a cell) or an inter-cell guard band (between cells). In the setting example 1-2, one sidelink BWP in a cell is set to exceed the LBT bandwidth. For that reason, a guard band of a sidelink is set between LBT bandwidths. In the example illustrated in FIG. 21, one sidelink BWP is set to include two LBT bandwidths. For that reason, a resource block of a guard is set between two subchannels (a subchannel 1 and a subchannel 2).

A resource set as the guard band is also referred to as guard RB (resource block) or a non-applicable RB (non-available RB). A resource applicable to communication, which is not the guard band, is also referred to as applicable RB (available RB).

A specific example of the resource pool setting equivalent to the LBT bandwidth includes setting of the number of PRBs (Physical Resource Blocks) of a subchannel. A parameter sl-SubchannelSize indicating the number of PRBs of one subchannel is 100 when the SCS is 15 kHz, 50 when the SCS is 30 kHz, and 25 when the SCS is 60 kHz.

A specific example of the setting the resource block set as the guard band includes a method of implicitly setting a position and width of the guard band. As a specific example, a parameter (for example, intraCellGuardBandsSL) for setting the guard band of the sidelink is defined. This parameter is notified by, for example, RRC signaling. The resource block set as the guard band of the sidelink is regarded as a guard band even if the resource block is set as a resource pool.

As another specific example of the setting of the resource block set as the guard band includes a method of separately setting start RBs of subchannels. As a specific example, a parameter (for example, sl-StartRB-Subchannel-List) for setting the start RBs of the respective subchannels is defined. This parameter is notified by, for example, RRC signaling. In other words, in this specific example, the subchannels are discontinuously allocated on the frequency axis. Resource blocks that are not set as resource pools may be considered as guard bands.

If a COT is acquired in only one LBT bandwidth, the resource block set as the guard band is not used for transmission unless there is an additional indication or condition.

When the guard band is set, a first scheme (a rate matching scheme) and a second scheme (a puncture scheme) described below are conceivable as examples of handling the guard band. In the first scheme (the rate matching scheme), a signal of a sidelink physical channel is not disposed in the resource block set as the guard band. In the second scheme (the puncture scheme), a signal of a sidelink physical channel is disposed in the resource block set as the guard band but is not transmitted.

Note that, when setting of the guard band is unnecessary according to a condition, resource utilization efficiency is improved by transmitting a signal in the guard band. Therefore, whether the resource block set as the guard band is actually applied as the guard band or which RB is an applicable RB may be indicated by a dynamic control signal.

As a specific example of the indication by the dynamic control signal, when one transmission device or a plurality of synchronized transmission devices has successfully acquired a COT in two or more continuous LBT bandwidths, the resource block set as the guard band may be used for signal transmission. As another specific example, when it is guaranteed in a long term that transmission and reception are not performed in an adjacent LBT bandwidth, the resource block set as the guard band may be used for signal transmission. As another specific example, when a transmission device equipped with a high-performance filter performs transmission in the LBT bandwidth, the resource block set as the guard band may be used for signal transmission. Whether to transmit the sidelink physical channel using the resource block set as the guard band (or whether to permit transmission) may be notified to the reception device with a PDCCH (a DCI) when the base station acquires a COT or may be notified to the reception device with a PSCCH (a first SCI) when the terminal device acquires a COT.

### <Setting example 1-3>

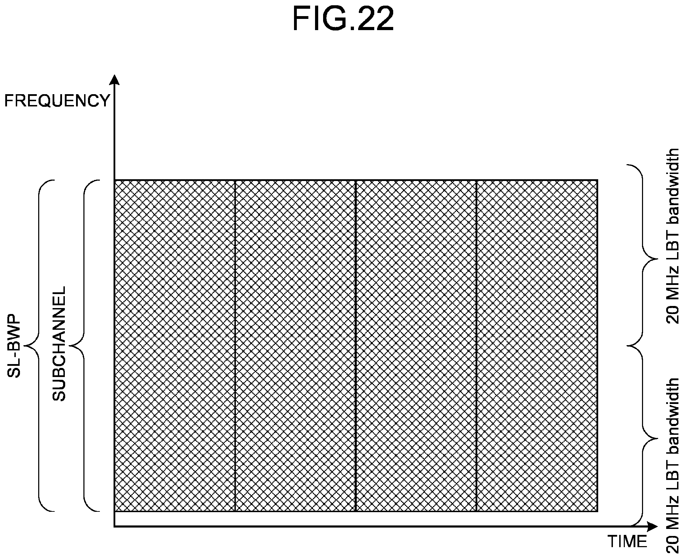

In the setting examples 1-1 and 1-2, one subchannel is allocated to one LBT bandwidth. However, one subchannel may be allocated to a plurality of LBT bandwidths. FIG. 22 is a diagram illustrating another example of the setting of the resource pool in the case in which the terminal device 40 performs the sidelink communication in the continuous waveform. The setting (hereinafter referred to as setting example 1-3) illustrated in FIG. 22 is applied to, for example, transmission or reception of a PSCCH, a PSSCH, or a PSFCH.

A resource pool of the setting example 1-3 includes one or a plurality of sidelink BWPs. In the example illustrated in FIG. 22, the resource pool includes one sidelink BWP. In the setting example 1-3, one sidelink BWP (a third sidelink BWP) includes one subchannel for the continuous waveform. The third sidelink BWP is set such that one subchannel configuring the third sidelink BWP corresponds to a plurality of LBT bandwidths.

In the case of the setting example 1-3, the terminal device 40 performs the sidelink communication only when a COT has been successfully acquired in two or more continuous LBT bandwidths. For that reason, no guard band is set between LBT bandwidths.

In the example illustrated in FIG. 22, the terminal device 40 transmits a signal in a sidelink physical channel only when COTs have been successfully acquired in all LBT bandwidths allocated as subchannels. For that reason, since it is unnecessary to provide a guard band between subchannels, a resource block originally supposed to be set as the guard band can be used for signal transmission. On the other hand, when acquisition of a COT of at least one LBT bandwidth has been unsuccessful, this resource pool cannot be used. In this case, a signal of a sidelink physical channel scheduled to be transmitted is dropped.

### <Setting example 1-4>

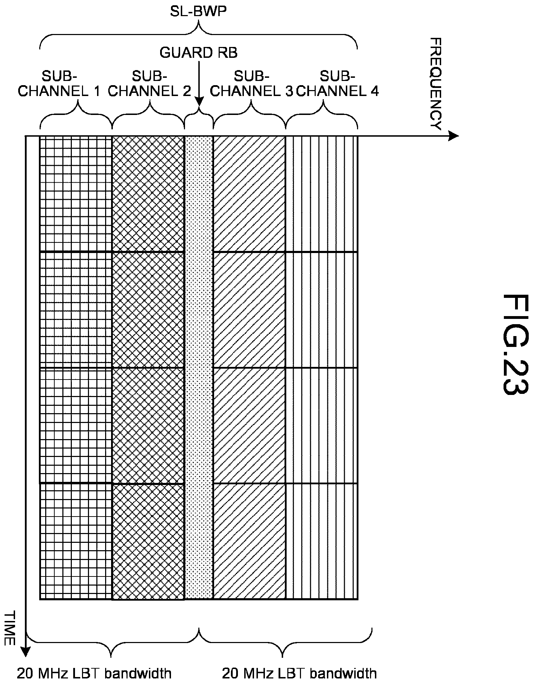

In the setting examples 1-1 to 1-3, one subchannel is allocated to one or a plurality of LBT bandwidths. However, a plurality of subchannels may be allocated to one LBT bandwidth. FIG. 23 is a diagram illustrating another example of the setting of the resource pool in the case in which the terminal device 40 performs the sidelink communication in the continuous waveform. The setting (hereinafter referred to as setting example 1-4) illustrated in FIG. 23 is applied to, for example, transmission or reception of a PSCCH or a PSSCH.

The resource pool of the setting example 1-4 includes one or a plurality of sidelink BWPs. In the example illustrated in FIG. 23, the resource pool includes one sidelink BWP. In the setting example 1-4, one sidelink BWP (a fourth sidelink BWP) includes a plurality of subchannels for the continuous waveform. In the example illustrated in FIG. 23, one sidelink BWP includes four subchannels for the continuous waveform. The fourth sidelink BWP is set such that a continuous plurality of subchannels selected out of a plurality of subchannels configuring the fourth sidelink BWP corresponds to one LBT bandwidth.

The fourth sidelink BWP may include a continuous plurality of subchannels corresponding to one LBT bandwidth. In the example illustrated in FIG. 23, the fourth sidelink BWP includes continuous two subchannels (subchannel 1 and 2) corresponding to the first LBT bandwidth and two continuous subchannels (subchannel 3 and 4) corresponding to the second LBT bandwidth. A guard band is provided between the continuous plurality of subchannels (the subchannel 1 and 2) and the continuous plurality of other subchannels (the subchannel 3 and 4).

In the setting example 1-4, the terminal device 40 always selects continuous subchannels as sidelink transmission resources from the resource pool. In the example illustrated in FIG. 23, the terminal device 40 selects, for example, the subchannel 1 and the subchannel 2 or the subchannel 3 and the subchannel 4 to satisfy the requirement of the occupied channel bandwidth. Then, the terminal device 40 performs the sidelink communication using the selected transmission resources.

Note that the number of resource blocks usable for transmission may be different between subchannels because of allocation of resource blocks serving as guard bands. To explain using FIG. 23 as an example, if a part of the subchannel 2 is set as a guard band, the number of usable resource blocks of the subchannel 2 may be smaller than the number of usable resource blocks of the subchannel 1.

A minimum unit of resource allocation on the frequency axis may be an LBT bandwidth. That is, frequency resource assignment included in sidelink control information (SCI) may be changed as a parameter indicating the LBT bandwidth. If the LBT bandwidth is indicated by the frequency resource assignment, sidelink transmission is allocated to all subchannels included in the indicated LBT bandwidth.

### <Sidelink transmission of a signal of a PSFCH in the continuous waveform>

In the unlicensed band, it is necessary to transmit a signal in a broadband of 80% (16 MHz) or more of the LBT bandwidth in order to satisfy the requirement of the occupied channel bandwidth. However, in the case of a signal of a PSFCH (Physical Sidelink Feedback Channel) defined in the PSFCH format 0, only one resource block (one PRB) is used for the transmission.

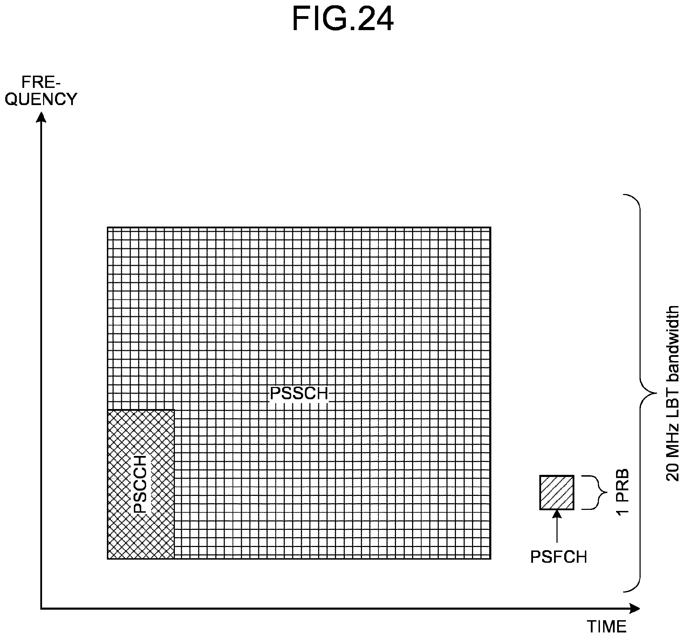

FIG. 24 is a diagram illustrating an example of a bandwidth of the PSFCH of the PSFCH format 0. Signals of a PSCCH and a PSSCH may be transmitted while occupying 80% of the 20 MHz LBT bandwidth. However, in the PSFCH format 0, only transmission in one PRB is defined. Therefore, it is difficult to occupy 80% of the 20 MHz LBT bandwidth only with the transmission of the signal of the PSFCH.

Therefore, the present embodiment solves the problems described above as follows.

### (Transmission example 1)

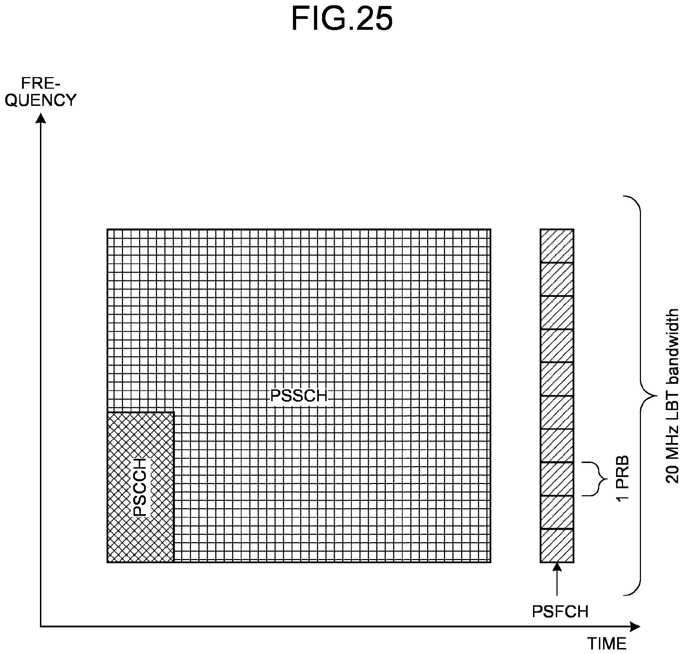

As an example of a sidelink transmission operation of a signal of a PSFCH in the continuous waveform, there is repeated transmission of a signal of a PSFCH format 0 in the frequency direction. FIG. 25 is a diagram illustrating an example of the repeated transmission of the signal of the PSFCH format 0 in the frequency direction. In the example illustrated in FIG. 25, a signal waveform of the PSFCH configured by cutting out twelve symbols from a pseudo-random sequence is continuously and repeatedly arranged on the frequency axis. The terminal device 40 continuously and repeatedly arranges the same waveform on the frequency axis as the waveform of the PSFCH calibrated with one PRB until the requirement of the occupied channel bandwidth is satisfied.

An advantage of this transmission example is that the bandwidth of the PSFCH can be easily extended. On the other hand, since the signal waveform is discontinuously interrupted on the frequency axis, a PAPR (Peak-to-Average Power Ratio) characteristic tends to deteriorate compared with a single-carrier waveform.

### (Transmission example 2)

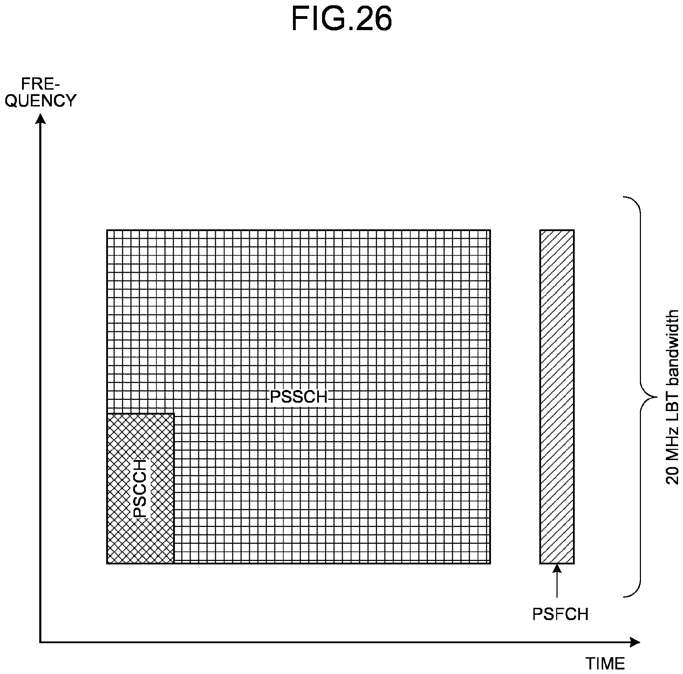

As another of the sidelink transmission of the signal of the PSFCH in the continuous waveform, there is sequence extension of the PSFCH format 0. For example, when a bandwidth of fifty PRBs is used as the PSFCH, the terminal device 40 extracts six hundred symbols from the pseudo-random sequence to configure the PSFCH. The symbols are arranged, for example, in order from a part having the lowest frequency. FIG. 26 is a diagram illustrating an example of the sequence extension of the PSFCH format 0. In the example illustrated in FIG. 26, a signal waveform of the PSFCH is configured and arranged to satisfy the LBT bandwidth of 20 MHz.

In this transmission example, since a sequence length is large, the number of orthogonal sequences increases. The number of code multiplexing with other terminal devices can be increased. Since these sequences are configured as one sequence, a waveform is continuous on the frequency axis and a PAPR characteristic is satisfactory.

### (Transmission example 3)

As another example of the sidelink transmission of the signal of the PSFCH in the continuous waveform, there is transmission using a new PSFCH format (for example, a PSFCH format 1) to which the continuous waveform is applied. Frequency mapping of the new PSFCH is the same as the example of the sequence extension of the PSFCH format 0 in FIG. 26. A difference is that the information by the orthogonal sequence is not notified but information by a value obtained by channel-encoding an information bit is notified. A channel code applied to the new PSFCH format is, for example, a Reed-Muller code, a polar code, or the like.

In the new PSFCH format, two or more bits of information can be notified. For example, in the new PSFCH format, information of a plurality of sidelink HARQ-ACKs may be carried. For example, in the new PSFCH format, SR (Scheduling Request) of the sidelink and CSI (Channel State Information) of the sidelink can be carried. For example, in the new PSFCH format, information concerning cooperation between terminal devices (for example, contention information, or the like) can be carried.

### (Transmission example 4)

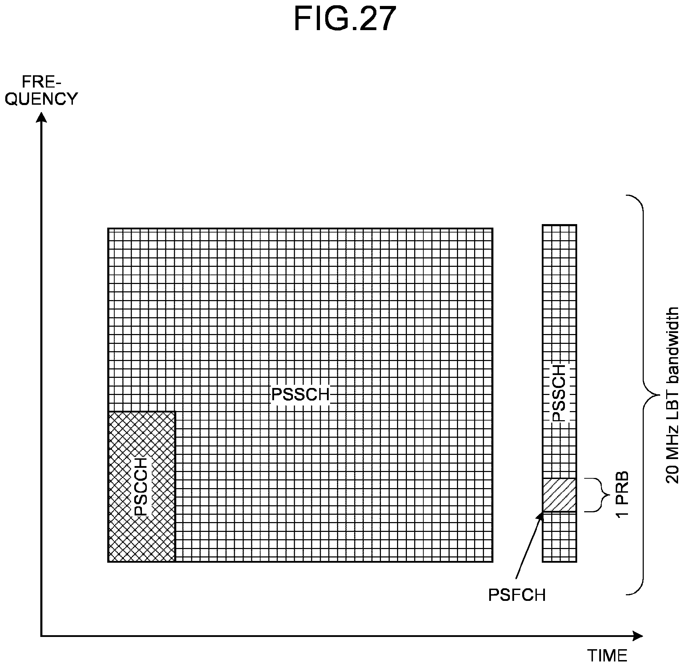

As another example of the sidelink transmission of the signal of the PSFCH in the continuous waveform, there is simultaneous transmission of the PSFCH and another sidelink physical channel. FIG. 27 is a diagram illustrating an example of simultaneous transmission of the PSFCH and the other sidelink physical channel. The PSFCH of the PSFCH format 0 is transmitted in one PRB. Resource blocks not sent on the PSFCH are used for transmission of other sidelink physical channels. The other sidelink physical channels are, for example, a PSSCH and a PSCCH.

### <Sidelink transmission of an S-SS/PSBCH block in the continuous waveform>

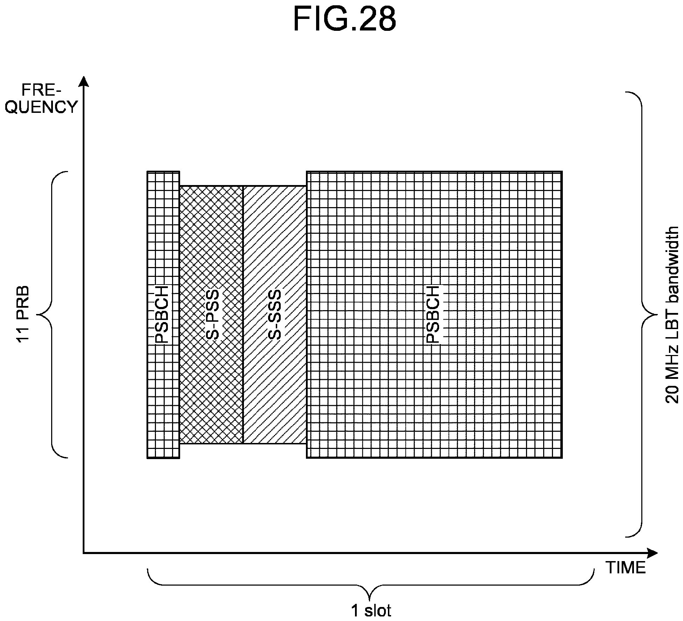

Also in transmission of an S-SS (Sidelink-Synchronization Signal)/PSBCH (Physical Sidelink Broadcast Control Channel) block (also referred to as an S-SSB (Sidelink - Synchronization Signal Block)) in the unlicensed band, it is necessary to satisfy the requirement of the occupied channel bandwidth. FIG. 28 is a diagram illustrating transmission of an S-SS/PSBCH block of the related art. The S-SS/PSBCH includes a two-symbol S-PSS (Sidelink-Primary Synchronization Signal), a two-symbol S-SSS (Sidelink-Secondary Synchronization Signal), and a nine-symbol PSBCH. The S-SS/PSBCH of the related art is transmitted using eleven PRBs. For transmission in only eleven PRBs, it is difficult to satisfy the requirement of the occupied channel bandwidth with a low SCS.

In the following explanation, a transmission example of the S-SS/PSBCH block that satisfies the requirement of the occupied channel bandwidth is explained.

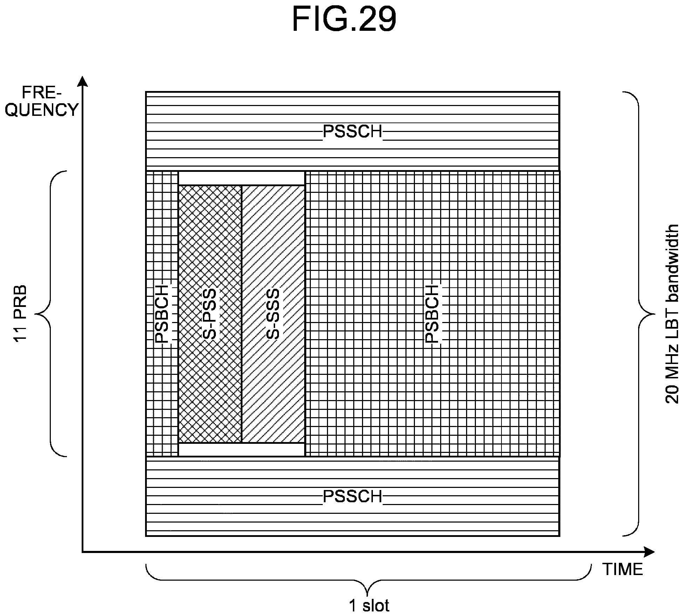

As an example of the transmission of the S-SS/PSBCH block that satisfies the requirement for occupied channel bandwidth, there is simultaneous transmission with other physical sidelink channels. FIG. 29 is a diagram illustrating an example of the transmission of the S-SS/PSBCH block that satisfies the requirement of the occupied channel bandwidth. The S-SS/PSBCH block is transmitted in eleven PRBs in the center of the LBT bandwidth of 20 MHz. At the same time, for example, a PSSCH is transmitted in a PRB other than the S-SS/PSBCH block to satisfy the transmission bandwidth of 20 MHz. A band is filled with PSSCH transmission to satisfy the requirement of the occupied channel bandwidth.

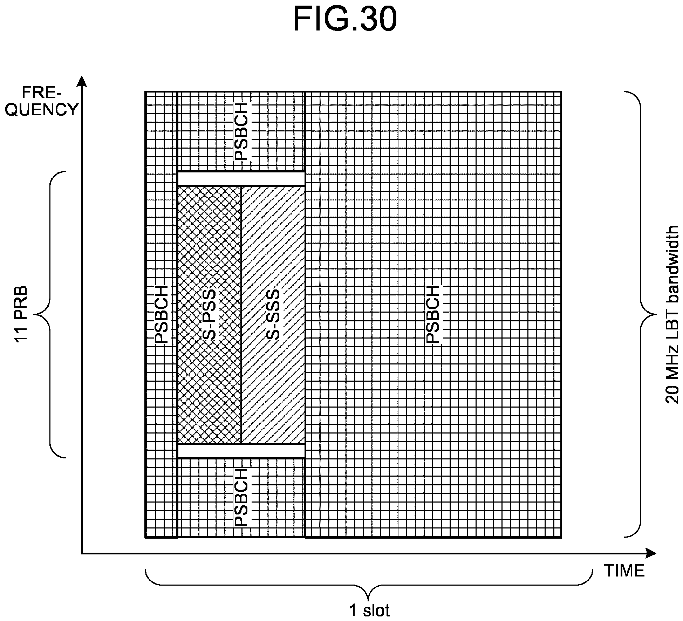

As another example of the transmission of the S-SS/PSBCH block that satisfies the requirement of the occupied channel bandwidth, there is extension of the S-SS/PSBCH. FIG. 30 is a diagram illustrating an example of transmission of an S-SS/PSBCH block that satisfies the requirement of the occupied channel bandwidth. The example illustrated in FIG. 30 is an example in which a transmission PRB of the PSBCH is extended to fill the LBT bandwidth of 20 MHz. The S-SS/PSBCH block is transmitted in eleven PRBs in the center of the LBT bandwidth of 20 MHz and an extended PSBCH is transmitted in the other PRBs. A bandwidth is filled with the extended PSBCH transmission to satisfy the requirement of the occupied channel bandwidth.

In the PSBCH in the unlicensed band, information (information concerning TDD setting, information concerning whether being in a coverage, and information concerning a frame number and a slot index in which the S-SS/PSBCH is transmitted) of the same sidelink MIB(Sidelink Master Information Block) as that in the licensed band may be transmitted or additional information may be further transmitted. Examples of the additional information include information relating to unlicensed (information indicating a licensed band or an unlicensed band, information indicating whether an LBT is necessary or unnecessary, information concerning a guard band required in the unlicensed band, information concerning the number of S-SS/PSBCH blocks of the same QCL, information concerning applicability and length of a discovery burst transmission window, and the like).

### <Case in which the sidelink communication is performed in the interlaced waveform>

By using different transmission waveforms, the requirement of the occupied channel bandwidth can be satisfied. As a technique that satisfies the requirement of the occupied channel bandwidth, there is application of the interlaced waveform. Subsequently, a setting example of a resource pool in the case in which the terminal device 40 performs the sidelink communication in the interlaced waveform is explained.

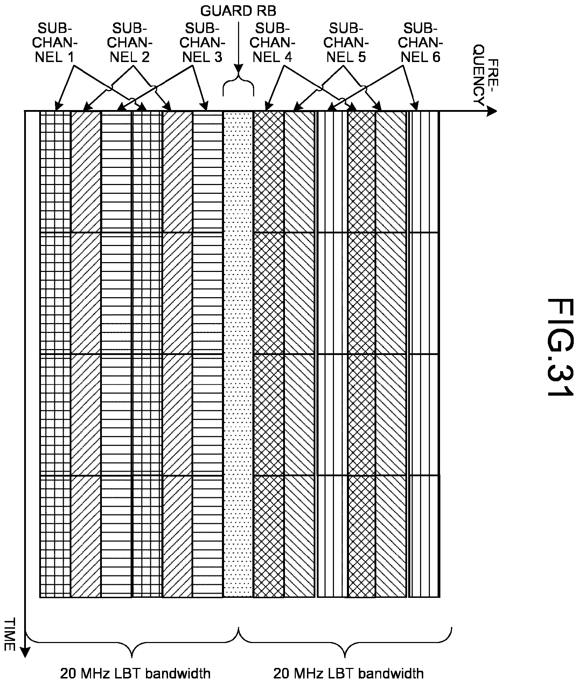

FIG. 31 is a diagram illustrating an example of setting of the resource pool in the case in which the terminal device 40 performs the sidelink communication in the interlaced waveform. The setting (hereinafter referred to as setting example 2-1) illustrated in FIG. 31 is applied to, for example, transmission or reception of a PSCCH, a PSSCH, or a PSFCH.

A resource pool of the setting example 2-1 includes one or a plurality of sidelink BWPs. In the example illustrated in FIG. 31, the resource pool includes one sidelink BWP. In the setting example 2-1, one sidelink BWP (a fifth sidelink BWP) includes a plurality of subchannels for the interlaced waveform. In the example illustrated in FIG. 31, one sidelink BWP includes six subchannels for the interlaced waveform.

The fifth sidelink BWP is set such that a continuous plurality of interlaced subchannels selected out of a plurality of subchannels configuring the fifth sidelink BWP corresponds to one LBT bandwidth. In the example illustrated in FIG. 31, the fifth sidelink BWP includes continuous three interlaced subchannels (subchannel 1, 2, 3) corresponding to the first LBT bandwidth and continuous three interlaced subchannels (subchannels 4, 5, 6) corresponding to the second LBT bandwidth. A guard band is provided between the continuous plurality of subchannels (subchannel 1, 2, 3) and other continuous plurality of subchannels (subchannels 4, 5, 6).

By applying the interlaced waveform to the sidelink transmission, the number of subchannels selectable as sidelink resources can be increased. Therefore, the contention probability between sidelink transmissions can be reduced. Compared with a resource pool configuration of the continuous waveform, the sidelink transmission of the terminal device 40 several times as much can be stored. Therefore, frequency utilization efficiency can be improved.

In the above explanation, the different interlace resources in the interlaced waveform are defined as the different subchannels. However, the different interlace resources may be defined differently. For example, different interlace resources in the same LBT bandwidth may be defined as the same subchannel.

### <Operation in the case in which a plurality of waveforms are mixed>

When the use of the interlaced waveform is enabled, a case in which two types of waveforms, that is, the continuous waveform and the interlaced waveform, are mixed is assumed. In the following explanation, the sidelink communication in which the plurality of signal waveforms (the continuous waveform and the interlaced waveform) are mixed is explained. Note that the following setting examples can also be applied to mixture with other signal waveforms (for example, narrow band frequency hopping).

### <Setting example 3-1>

In a setting example 3-1, an example in which corresponding resources are individually set for each signal waveform is explained. For example, in the setting example 3-1, a resource for the continuous waveform and a resource for the interlaced waveform are set in the terminal device 40. At this time, in the terminal device 40, the resource for the continuous waveform and the resource for the interlaced waveform are set not to overlap each other in a time and a frequency.

The individual resources may be allocated in time division multiplexing (TDD) or frequency division multiplexing (FDD). In this case, a first resource pool including one or a plurality of sidelink BWPs for the continuous waveform and a second resource pool including one or a plurality of sidelink BWPs for the interlaced waveform may be set in the terminal device 40. Alternatively, a resource group (a first sub-resource pool) including one or a plurality of sidelink BWPs for the continuous waveform and a resource group (a second sub-resource pool) including one or a plurality of sidelink BWPs for the interlaced waveform may be included in one resource pool.

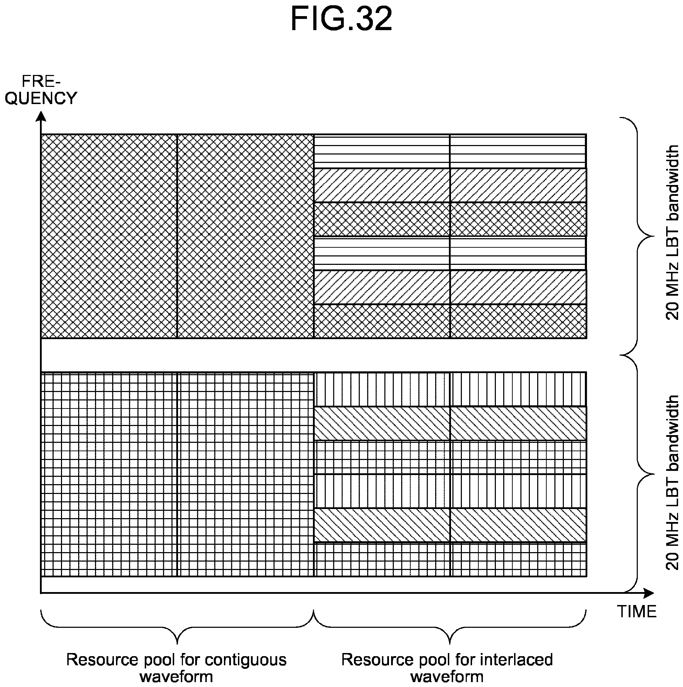

FIG. 32 is a diagram illustrating an example of setting of resource pools in the case in which a plurality of signal waveforms is mixed. In the example illustrated in FIG. 32, the resource pools are divided by time division multiplexing (TDD). In the example illustrated in FIG. 32, resource pools (or sub-resource pools) for the continuous waveform are set in first and second slots and resource pools (or sub-resource pools) for the interlaced waveform are set in third and fourth slots.

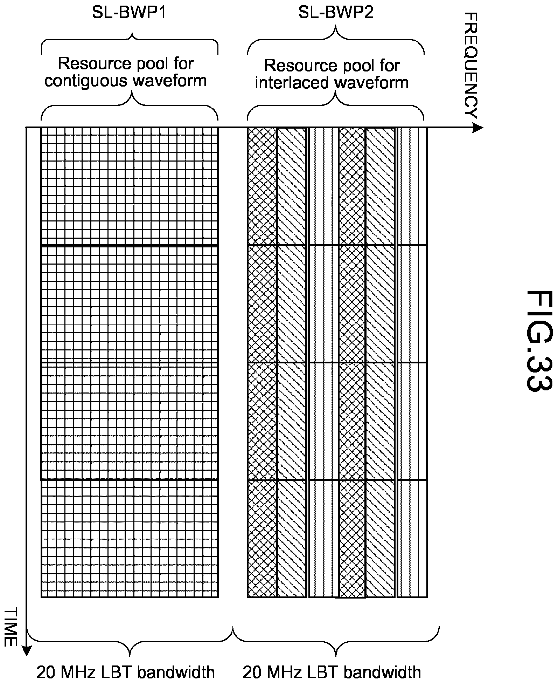

FIG. 33 is a diagram illustrating another example of the setting of the resource pools in the case in which the plurality of signal waveforms is mixed. In the example illustrated in FIG. 33, the resource pools are divided by frequency division multiplexing (FDD). In the example illustrated in FIG. 33, SL-BWP1 and a resource pool (or sub-resource pool) for the continuous waveform are set in a first LBT bandwidth and SL-BWP2 and a resource pool (or sub-resource pool) for the interlaced waveform are set in a second LBT bandwidth.

In the case of the setting example 3-1, the resource for the continuous waveform and the resource for the interlaced waveform are orthogonal in a time/a frequency. For that reason, the communication system 1 may adjust the resources to be used among the terminal devices 40 that perform sidelink to be orthogonal. Specifically, the terminal device 40 may notify, to other terminal devices 40, information concerning a resource scheduled to be used as the continuous waveform or the interlaced waveform or a resource not scheduled to be used as the continuous waveform or the interlaced waveform. The terminal device 40 that has received the information may change setting of a resource pool of the terminal device 40 based on the information.

### <Setting example 3-2>

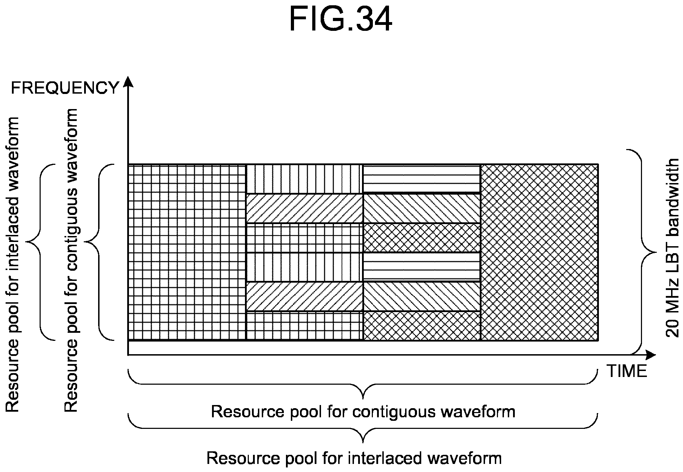

In a setting example 3-2, a resource pool is set such that a sidelink physical channel to which a plurality of signal waveforms is applied can be transmitted by a common resource. FIG. 34 is a diagram illustrating another example of the setting of the resource pool in the case in which the plurality of signal waveforms is mixed.

In this case, the terminal device 40 on a transmission side determines, based on a predetermined condition or an indication, a signal waveform to be applied to the sidelink physical channel and transmits the signal waveform using the sidelink resource.

As an operation of the terminal device 40 on a reception side, the following operation can be assumed. For example, the terminal device 40 attempts to detect, based on a predetermined condition or an indication, a signal waveform to be applied to the sidelink physical channel. As another example, the terminal device 40 attempts to detect signal waveforms of all sidelink physical channels that can be received in the resource pool.

### <Resource reservation of the interlaced waveform>

On the sidelink, future resources can be reserved for sidelink transmission (PSCCH transmission and PSSCH transmission). This operation of the sidelink is referred to as resource reservation. In the resource pool setting in the case in which a plurality of signal waveforms are mixed, it is conceivable that interpretation of resource reservation differs between reservation of the continuous waveform and reservation of the interlaced waveform.

When a relevant resource is reserved in the continuous waveform, both the terminal device 40 communicating in the continuous waveform and the terminal device 40 communicating in the interlaced waveform interpret that the resource is reserved.

When a relevant resource is reserved in the interlaced waveform, the terminal device 40 communicating in the continuous waveform interprets that even a partially overlapping resources is reserved. On the other hand, the terminal device 40 communicating in the interlaced waveform interprets that a reserved subchannel of the interlace is reserved and interprets that the other subchannels of the interlace are not reserved.

In the resource reservation, information concerning a waveform to be reserved may be included. Examples of the information concerning the waveform to be reserved include a field for explicitly notifying the waveform, frequency resource assignment, and the like. As the field for explicitly notifying the waveform, a field not used in the unlicensed band (for example, a resource reservation period, a Number of DMRS port, or the like) may be diverted to define the field. Alternatively, the communication device may notify the waveform using a state of a part of the frequency resource assignment. The interpretation of the resource reservation is carried out based on the information concerning the waveform to be reserved.

As another example in which the waveform information is not used, the resource reservation is recognized from frequency resource assignment information in the interlaced waveform. For example, in the frequency resource assignment in the interlaced waveform, when a part of interlace resources of one LBT bandwidth is reserved, the interlace resources can be interpreted as being reserved by the interlaced waveform. On the other hand, if all the interlace resources of one LBT bandwidth are reserved, the interface resources can be interpreted as being reserved by the continuous waveform. In this case, even in the terminal device that transmits the continuous waveform, the information indicating the frequency resource assignment is configured based on the interlace resource.

### <Switching of a signal waveform to be applied>

The terminal device 40 may be capable of performing both of the sidelink communication using the continuous waveform and the sidelink communication using the interlaced waveform. The terminal device 40 capable of using a plurality of signal waveforms (the continuous waveform and the interlaced waveform) can switch a signal waveform applied to transmission of a sidelink physical channel. In the following explanation, an example of an operation of switching the signal waveform of the sidelink physical channel is explained.

### (1) Switching by RRC setting

A signal waveform to be used for sidelink transmission may be indicated to the terminal device 40 by RRC setting. For example, when the continuous waveform is indicated from another communication device (for example, the base station 20) by the RRC setting, the terminal device 40 applies the continuous waveform to a signal of the sidelink physical channel. On the other hand, when the interlaced waveform is indicated by the RRC setting from another communication device, the terminal device 40 applies the interlaced waveform to the signal of the sidelink physical channel. A parameter indicating a transmission signal waveform of a sidelink is included in parameters for setting the sidelink. This parameter may be included in system information (SIB: System Information Block) or may be included in dedicated RRC.

### (2) Switching by an SL-BWP, a resource pool, or a transmission resource

The terminal device 40 may switch a signal waveform to be transmitted according to a resource used for transmitting the signal of the sidelink physical channel. Examples of resources include an SL-BWP, a resource pool, or a selected transmission resource.

As a specific example of an operation, the following operation is assumed. For example, when the resource used to transmit the signal of the sidelink physical channel is linked with the transmission of the continuous waveform, the terminal device 40 applies the continuous waveform to the signal of the sidelink physical channel. On the other hand, when the resource used to transmit the signal of the sidelink physical channel is linked with the transmission of the interlaced waveform, the terminal device 40 applies the interlaced waveform to the signal of the sidelink physical channel.

### (3) Switching by the distance between transmission and reception or a geographical zone

The terminal device 40 may switch, according to the distance between transmission and reception, a signal waveform to be transmitted. Since the interlaced waveform can be transmitted with less transmission power compared with the continuous waveform, the interlaced waveform is suitable for wide coverage transmission. For that reason, when a signal is transmitted to a reception device at a long distance, it is preferable to apply the interlaced waveform. As an example of an element for determining the distance, a geographical distance, a geographical zone, a path loss between transmission and reception terminal devices, an SL-RSRP or an RSSI from the terminal device 40, or the like is used.

As a specific example of an operation, the following operation is assumed. For example, when the terminal device 40 on the reception side is present in the same zone, the terminal device 40 on the transmission side applies the continuous waveform to the signal of the sidelink physical channel. When the terminal device 40 on the reception side is present in a different zone, the terminal device 40 on the transmission side applies the interlaced waveform to the signal of the sidelink physical channel.

### (4) Switching by a cast type

The terminal device 40 may switch, according to a cast type of the sidelink transmission, the signal waveform to be transmitted. For example, in the case of broadcast, since it is necessary to send a sidelink to a reception device at a long distance, the interlaced waveform is suitable.

As a specific example of an operation, the following operation is assumed. For example, when a cast type is unicast or group-cast, the terminal device 40 applies the continuous waveform to the signal of the sidelink physical channel. On the other hand, when the cast type is broadcast, the terminal device 40 applies the interlaced waveform to the sidelink physical channel.

### (5) Switching by a type of a physical channel

The terminal device 40 may switch, according to a type of a physical channel, the signal waveform to be transmitted.

For example, since the PSFCH of the related art is sent in one PRB, it is difficult to satisfy the requirement of the occupied channel bandwidth. Therefore, resource mapping of a new PSFCH to which the interlaced waveform is applied may be defined. On the other hand, a PSCCH and a PSSCH are capable of satisfying the requirement of the occupied channel bandwidth even with the resource mapping of the related art. As a specific example of an operation, the following operation is assumed. For example, when the physical channel is a PSCCH/a PSSCH, the terminal device 40 applies the continuous waveform to the signal of the sidelink physical channel. On the other hand, when the physical channel is the PSFCH, the terminal device 40 applies the interlaced waveform to the signal of the sidelink physical channel.

As another specific example of the operation, for example, when the physical channel is a PSCCH, the terminal device 40 applies the continuous waveform to the PSCCH. On the other hand, when the physical channel is a PSSCH, the terminal device 40 applies the interlaced waveform to the PSSCH. A configuration example of the PSCCH that implements this example is explained in PSSCH/PSCCH resource mapping of interlaced waveform transmission explained below.

### (6) Switching by capability

The terminal device 40 may switch, according to transmission capability or reception capability of the interlaced waveform, the signal waveform to be transmitted. For example, when the terminal device 40 on the transmission side has transmission capability for the interlaced waveform and the terminal device 40 on the reception side has reception capability for the interlaced waveform, the terminal device 40 applies the interlaced waveform to the signal of the sidelink physical channel. Otherwise, the terminal device 40 applies the continuous waveform to the signal of the sidelink physical channel.

### (7) Switching by SCI indication

The terminal device 40 may switch, according to a field indicating a signal waveform included in SCI, the signal waveform to be transmitted. For example, when the field included in the SCI indicates the continuous waveform, the terminal device 40 applies the continuous waveform to the sidelink physical channel. On the other hand, when the field included in the SCI indicates the interlaced waveform, the terminal device 40 applies the interlaced waveform to the sidelink physical channel.

As a specific example of the SCI indication, a transmission waveform of a PSSCH corresponding to the SCI is indicated. A transmission waveform of the PSSCH in the same slot as a transmitted SCI is set according to the indication of the SCI. In this case, it is preferable that the continuous waveform and the interlaced waveform have the same design of the PSCCH.

As another specific example of the SCI indication, the transmission waveform indicated by the SCI is applied to a PSCCH and/or a PSSCH after a predetermined slot from a slot in which the SCI is received. In this case, further, a predetermined timer and a default waveform are preferably set. The transmission waveform designated by the SCI indication is applied until the predetermined timer expires after being indicated by the SCI. Otherwise, the default waveform is applied.

### (8) Switching by the licensed band/the unlicensed band

The terminal device 40 may switch the signal waveform to be transmitted according to whether the unlicensed band is used. For example, in the case of operation in the licensed band (operation not involving shared spectrum channel access), the terminal device 40 applies the continuous waveform to the sidelink physical channel. On the other hand, in the case of operation in the unlicensed band (operation involving shared spectrum channel access), the terminal device 40 applies the interlaced waveform to the sidelink physical channel.

Note that the switching processing of (1) to (8) described above is assumed to be applied to the terminal device 40 on the transmission side but may be applied to the terminal device 40 on the reception side. Specifically, the terminal device 40 instructed only to receive the continuous waveform may not attempt to receive the sidelink physical channel of the interlaced waveform. On the other hand, the terminal device 40 instructed only to receive the interlaced waveform may not attempt to receive the sidelink physical channel of the continuous waveform.

Note that the switching processing of (1) to (8) described above can also be applied to switching between different transmission waveforms or different resource pool configurations. For example, even when the interlaced waveform is replaced with the narrow band frequency hopping, the switching processing of (1) to (8) described above can be performed in the same manner.

### <PSCCH/PSSCH in the Interlaced waveform transmission>

In the interlaced waveform, a PSCCH and a PSSCH are arranged to correspond to the interlaced waveform. In the following explanation, an example of resource mapping of the PSCCH and the PSSCH in the interlaced waveform transmission is explained.

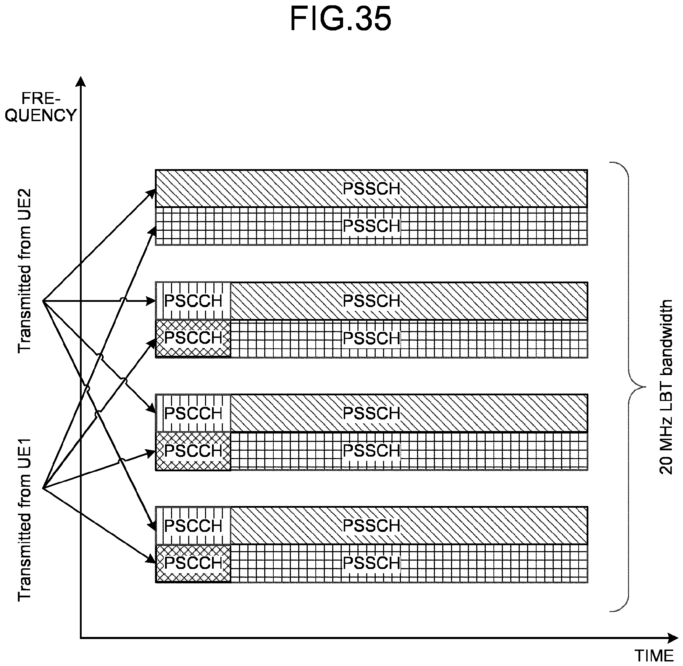

As an example of a PSCCH/a PSSCH in the interlaced waveform transmission, both of the PSCCH and the PSSCH are mapped to subchannels in the interlaced waveform. FIG. 35 is a diagram illustrating an example of resource mapping of the PSCCH/the PSSCH in interlaced waveform transmission. The example illustrated in FIG. 35 is an example in which the UE1 and the UE2 respectively transmit the PSCCH and the PSSCH together according to the resource mapping of the interlaced waveform explained above.

Accordingly, since the same interlaced waveform is applied to the PSCCH and the PSSCH, this contributes to a reduction in a PAPR. Since resources of different interlaces are used, the PSCCH and the PSSCH do not cause transmission contention between different interlaced transmissions.

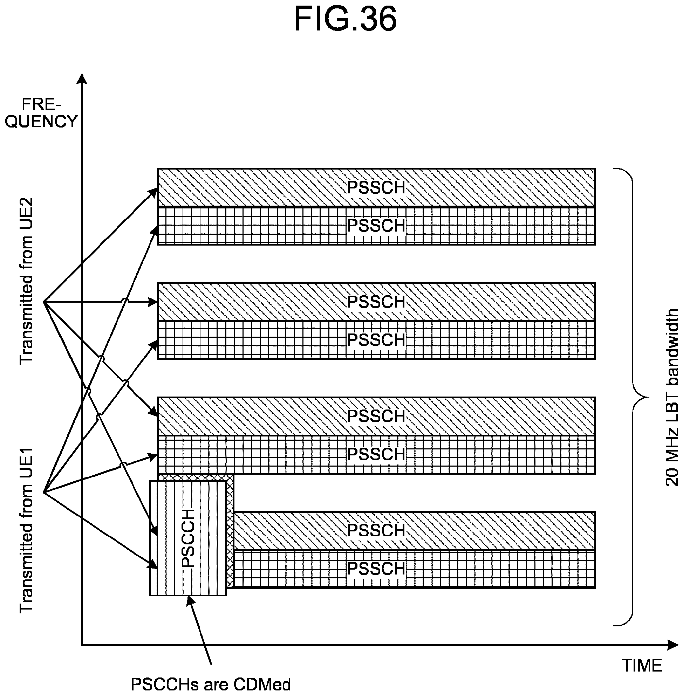

As another example of the PSCCH/the PSSCH in the interlaced waveform transmission, the PSSCH is interlace-mapped but the PSCCH is mapped om the continuous waveform of the related art. FIG. 36 is a diagram illustrating an example of resource mapping of the PSCCH/the PSSCH in the interlaced waveform transmission. Since the PSCCH is mapped in the same continuous waveform as the continuous waveform of the related art, the reception terminal device can monitor a sidelink signal in the same scheme irrespective of whether the PSSCH is the continuous waveform or the interlaced waveform.

In this example, PSCCHs corresponding to PSSCHs of different interlaces can be mapped to the same resource. In this case, different PSCCHs are preferably code-multiplexed into the same resource. Accordingly, it is possible to dynamically switch the transmission waveform of the PSSCH according to the indication of the PSCCH.

### <PSFCH in the interlaced waveform Transmission>

In the interlaced waveform, it is assumed that a PFSCH is also arranged to correspond to the interlaced waveform. In the following explanation, an example of resource mapping of the PSFCH in the interlaced waveform transmission is explained.

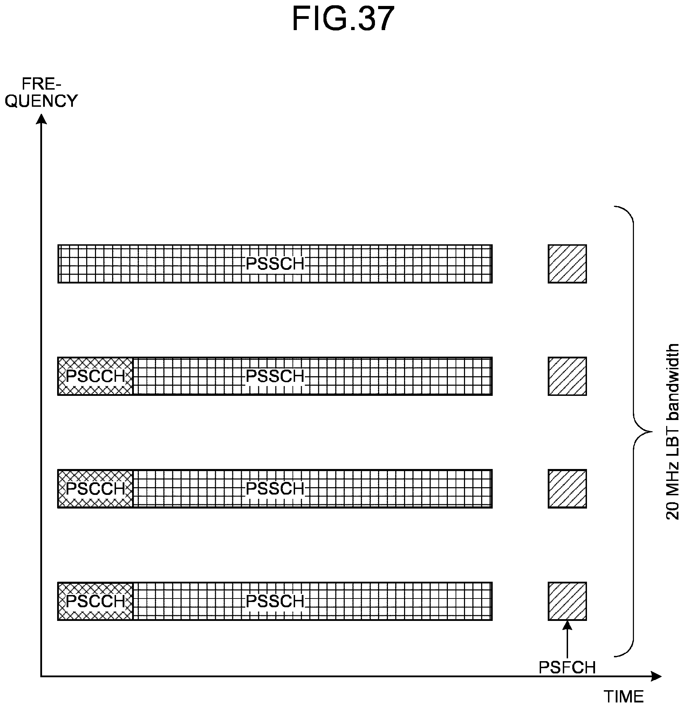

FIG. 37 is a diagram illustrating the example of the resource mapping of the PSFCH in the interlaced waveform transmission. The PSFCH is also repeatedly arranged in the frequency direction according to the interlace mapping.

In the PSFCH in this example, a sequence including one PRB may be repeatedly arranged in the frequency direction or a sequence may be configured assuming a PRB of an interlace and arranged in order in the frequency direction.

### <<Modifications>>

The embodiment explained above indicate an example. Various changes and applications of the embodiment are possible.

For example, the control device that controls the management device 10, the base station 20, the relay station 30, and the terminal device 40 in the present embodiment may be implemented by a dedicated computer system or may be implemented by a general-purpose computer system.

For example, a communication program for executing the operation explained above is distributed by being stored in a computer-readable recording medium such as an optical disk, a semiconductor memory, a magnetic tape, or a flexible disk. Then, for example, the program is installed in a computer and the control device is configured by executing the processing explained above. At this time, the control device may be a device (for example, a personal computer) on the outside of the management device 10, the base station 20, the relay station 30, and the terminal device 40. The control device may be a device (for example, the control unit 13, the control unit 23, the control unit 33, and the control unit 43) on the inside of the management device 10, the base station 20, the relay station 30, and the terminal device 40.

The communication program explained above may be stored in a disk device included in a server device on a network such as the Internet such that the communication program can be downloaded to a computer. The functions explained above may be implemented by cooperation of an OS (Operating System) and application software. In this case, a portion other than the OS may be stored in a medium and distributed or the portion other than the OS may be stored in the server device such that the portion can be downloaded to the computer.

Among the kinds of processing explained in the embodiments, all or a part of the processing explained as being automatically performed can be manually performed or all or a part of the processing explained as being manually performed can be automatically performed by a publicly-known method. Besides, the processing procedures, the specific names, and the information including the various data and parameters explained in the document and illustrated in the drawings can be optionally changed except when specifically noted otherwise. For example, the various kinds of information illustrated in the figures are not limited to the illustrated information.

The illustrated components of the devices are functionally conceptual and are not always required to be physically set as illustrated in the figures. That is, specific forms of distribution and integration of the devices are not limited to the illustrated forms and all or a part thereof can be functionally or physically distributed and integrated in any unit according to various loads, usage situations, and the like. Note that this configuration by the distribution and the integration may be dynamically performed.

The embodiments explained above can be combined as appropriate in a range for not causing processing contents to contradict one another. The order of the steps illustrated in the flowcharts of the embodiments explained above can be changed as appropriate.

For example, the present embodiments can be implemented as any component configuring a device or a system, for example, a processor functioning as a system LSI (Large Scale Integration) or the like, a module that uses a plurality of processors or the like, a unit that uses a plurality of modules or the like, or a set obtained by further adding other functions to the unit (that is, a component as a part of the device).

Note that, in the present embodiments, the system means a set of a plurality of components (devices, modules (parts), and the like). It does not matter whether all the components are present in the same housing. Therefore, both of a plurality of devices housed in separate housings and connected via a network and one device in which a plurality of modules is housed in one housing are systems.

For example, the present embodiments can adopt a configuration of cloud computing in which one function is shared and processed by a plurality of devices in cooperation via a network.

### <<Conclusion>>

As described above, according to the embodiment of the present disclosure, the terminal device 40 is the communication device that performs the sidelink communication using the unlicensed band. The terminal device 40 acquires information of a resource pool including one or a plurality of sidelink BWPs from another communication device (for example, the base station 20). At this time, one or a plurality of sidelink BWPs are set to correspond to one or a plurality of LBT bandwidths. The terminal device 40 determines, based on the acquired information of the resource pool, a sidelink resource to be used for the sidelink communication. Then, the terminal device 40 performs the sidelink communication using the determined sidelink resource.

Accordingly, since the bandwidth of the sidelink BWP used for the sidelink is equivalent to the LBT bandwidth, it is easy for the terminal device 40 to satisfy the requirement of the occupied channel bandwidth. As a result, the terminal device 40 can implement high communication performance even when the unlicensed band is used for the sidelink communication.

Although the embodiments of the present disclosure are explained above, the technical scope of the present disclosure is not limited to the embodiments per se. Various changes can be made without departing from the gist of the present disclosure. Components in different embodiments and modifications may be combined as appropriate.

The effects in the embodiments described in this specification are only illustrations and are not limited. Other effects may be present.

Note that the present technique can also take the following configurations.
(1) A communication device that performs sidelink communication using an unlicensed band, the communication device comprising:
   an acquisition unit that acquires information of a resource pool including one or a plurality of sidelink BWPs (Sidelink Bandwidth Parts); and
   a communication control unit that performs, based on the information of the resource pool, the sidelink communication using the unlicensed band, wherein
   the one or the plurality of sidelink BWPs are set to correspond to one or a plurality of LBT bandwidths (Listen Before Talk Bandwidths).
(2) The communication device according to (1), wherein
   the resource pool includes a first sidelink BWP including one subchannel for a continuous waveform, and
   the first sidelink BWP is set such that the one subchannel configuring the first sidelink BWP corresponds to one LBT bandwidth.
(3) The communication device according to (1), wherein
   the resource pool includes a second sidelink BWP including a plurality of subchannels for a continuous waveform,
   the second sidelink BWP is set such that each of the plurality of subchannels configuring the second sidelink BWP corresponds to one LBT bandwidth, and
   a guard band is provided between the plurality of subchannels configuring the second sidelink BWP.
(4) The communication device according to (1), wherein
   the resource pool includes a third sidelink BWP including one subchannel for a continuous waveform, and
   the third sidelink BWP is set such that the one subchannel configuring the third sidelink BWP corresponds to a plurality of LBT bandwidths.
(5) The communication device according to (1), wherein
   the resource pool includes a fourth sidelink BWP including a plurality of subchannels for a continuous waveform, and
   the fourth sidelink BWP is set such that a continuous plurality of subchannels selected out of the plurality of subchannels configuring the fourth sidelink BWP corresponds to one LBT bandwidth.
(6) The communication device according to (5), wherein
   the fourth sidelink BWP includes a plurality of the continuous plurality of subchannels corresponding to the one LBT bandwidth, and
   a guard band is provided between the continuous plurality of subchannels and other continuous plurality of the continuous subchannels.
(7) The communication device according to (1), wherein
   the communication control unit performs repetition of a signal of a PSFCH in a frequency direction or sequence extension of a PSFCH format such that a bandwidth of the signal of the PSFCH becomes the LBT bandwidth when sidelink transmission of the signal of the PSFCH in a continuous waveform is performed based on the information of the resource pool.
(8) The communication device according to (1), wherein
   the resource pool includes a fifth sidelink BWP including a plurality of subchannels for an interlaced waveform, and
   the fifth sidelink BWP is set such that a continuous plurality of subchannels selected out of the plurality of subchannels configuring the fifth sidelink BWP corresponds to one LBT bandwidth.
(9) The communication device according to (8), wherein
   the fifth sidelink BWP includes a plurality of the continuous plurality of subchannels corresponding to the one LBT bandwidth, and
   a guard band is provided between the continuous plurality of subchannels and other continuous plurality of the subchannels.
(10) The communication device according to any one of (1) to (9), wherein
   the resource pool includes a first sub-resource pool including one or more sidelink BWPs for a continuous waveform and a second sub-resource pool including one or more sidelink BWPs for an interlaced waveform, and
   the one or the plurality of sidelink BWPs for the continuous waveform and the one or the plurality of sidelink BWPs for the interlaced waveform are respectively set to correspond to one or a plurality of LBT bandwidths.
(11) The communication device according to any one of (1) to (9), wherein
   the acquisition unit acquires information of a first resource pool including one or a plurality of sidelink BWPs for a continuous waveform and information of a second resource pool including one or a plurality of sidelink BWPs for an interlaced waveform,
   the one or the plurality of sidelink BWPs for the continuous waveform and the one or the plurality of sidelink BWPs for the interlaced waveform are respectively set to correspond to one or a plurality of LBT bandwidths, and
   the communication control unit performs, based on at least one of the information of the first resource pool and the information of the second resource pool, sidelink communication using an unlicensed band.
(12) The communication device according to any one of (1) to (11), wherein
   the communication control unit is capable of performing both of sidelink communication using a continuous waveform and sidelink communication using an interlaced waveform.
(13) The communication device according to (12), wherein
   the communication control unit switches, based on an instruction from another communication device, the sidelink communication using the continuous waveform and the sidelink communication using the interlaced waveform.
(14) The communication device according to (12), wherein
   the communication control unit switches, based on information concerning a distance of the sidelink communication, the sidelink communication using the continuous waveform and the sidelink communication using the interlaced waveform.
(15) The communication device according to (12), wherein
   the communication control unit switches, according to a cast type of the sidelink communication, the sidelink communication using the continuous waveform and the sidelink communication using the interlaced waveform.
(16) The communication device according to (12), wherein
   the communication control unit switches between sidelink communication using a continuous waveform and sidelink communication using an interlaced waveform according to a physical channel of the sidelink communication.
(17) The communication device according to (12), wherein
   the communication control unit switches, according to capability of a communication device serving as a communication partner of the sidelink communication, the sidelink communication using the continuous waveform and the sidelink communication using the interlaced waveform.
(18) A communication device comprising
   a transmission unit that transmits information of a resource pool used for sidelink communication using an unlicensed band to another communication device that performs the sidelink communication, wherein
   the resource pool includes one or a plurality of sidelink BWPs (Sidelink Bandwidth Parts), and
   the one or the plurality of sidelink BWPs are set to correspond to one or a plurality of LBT bandwidths (Listen Before Talk Bandwidths).
(19) A communication method executed by a communication device that performs sidelink communication using an unlicensed band, the communication method comprising:
   an acquisition step of acquiring information of a resource pool including one or a plurality of sidelink BWPs (Sidelink Bandwidth Parts); and
   a communication control step of performing, based on the information of the resource pool, sidelink communication using an unlicensed band, wherein
   the one or the plurality of sidelink BWPs are set to correspond to one or a plurality of LBT bandwidths (Listen Before Talk Bandwidths).
(20) A communication method executed by a communication device, the communication method comprising
   a transmission step of transmitting information of a resource pool used for sidelink communication using an unlicensed band to another communication device that performs the sidelink communication, wherein
   the resource pool includes one or a plurality of sidelink BWPs (Sidelink Bandwidth Parts), and
   the one or the plurality of sidelink BWPs are set to correspond to one or a plurality of LBT bandwidths (Listen Before Talk Bandwidths).

### Reference Signs List

1 COMMUNICATION SYSTEM
10 MANAGEMENT DEVICE
20 BASE STATION
30 RELAY STATION
40 TERMINAL DEVICE
11 COMMUNICATION UNIT
21, 31, 41 WIRELESS COMMUNICATION UNIT
12, 22, 32, 42 STORAGE UNIT
13, 23, 33, 43 CONTROL UNIT
211, 311, 411 TRANSMISSION PROCESSING UNIT
212, 312, 412 RECEPTION PROCESSING UNIT
213, 313, 413 ANTENNA
231, 331, 431 ACQUISITION UNIT
232, 332, 432 TRANSMISSION UNIT
233, 333, 433 COMMUNICATION CONTROL UNIT

## Claims

1. A communication device that performs sidelink communication using an unlicensed band, the communication device comprising:
an acquisition unit that acquires information of a resource pool including one or a plurality of sidelink BWPs (Sidelink Bandwidth Parts); and
a communication control unit that performs, based on the information of the resource pool, the sidelink communication using the unlicensed band, wherein
the one or the plurality of sidelink BWPs are set to correspond to one or a plurality of LBT bandwidths (Listen Before Talk Bandwidths).

2. The communication device according to claim 1, wherein
the resource pool includes a first sidelink BWP including one subchannel for a continuous waveform, and
the first sidelink BWP is set such that the one subchannel configuring the first sidelink BWP corresponds to one LBT bandwidth.

3. The communication device according to claim 1, wherein
the resource pool includes a second sidelink BWP including a plurality of subchannels for a continuous waveform,
the second sidelink BWP is set such that each of the plurality of subchannels configuring the second sidelink BWP corresponds to one LBT bandwidth, and
a guard band is provided between the plurality of subchannels configuring the second sidelink BWP.

4. The communication device according to claim 1, wherein
the resource pool includes a third sidelink BWP including one subchannel for a continuous waveform, and
the third sidelink BWP is set such that the one subchannel configuring the third sidelink BWP corresponds to a plurality of LBT bandwidths.

5. The communication device according to claim 1, wherein
the resource pool includes a fourth sidelink BWP including a plurality of subchannels for a continuous waveform, and
the fourth sidelink BWP is set such that a continuous plurality of subchannels selected out of the plurality of subchannels configuring the fourth sidelink BWP corresponds to one LBT bandwidth.

6. The communication device according to claim 5, wherein
the fourth sidelink BWP includes a plurality of the continuous plurality of subchannels corresponding to the one LBT bandwidth, and
a guard band is provided between the continuous plurality of subchannels and other continuous plurality of the continuous subchannels.

7. The communication device according to claim 1, wherein
the communication control unit performs repetition of a signal of a PSFCH in a frequency direction or sequence extension of a PSFCH format such that a bandwidth of the signal of the PSFCH becomes the LBT bandwidth when sidelink transmission of the signal of the PSFCH in a continuous waveform is performed based on the information of the resource pool.

8. The communication device according to claim 1, wherein
the resource pool includes a fifth sidelink BWP including a plurality of subchannels for an interlaced waveform, and
the fifth sidelink BWP is set such that a continuous plurality of subchannels selected out of the plurality of subchannels configuring the fifth sidelink BWP corresponds to one LBT bandwidth.

9. The communication device according to claim 8, wherein
the fifth sidelink BWP includes a plurality of the continuous plurality of subchannels corresponding to the one LBT bandwidth, and
a guard band is provided between the continuous plurality of subchannels and other continuous plurality of the subchannels.

10. The communication device according to claim 1, wherein
the resource pool includes a first sub-resource pool including one or more sidelink BWPs for a continuous waveform and a second sub-resource pool including one or more sidelink BWPs for an interlaced waveform, and
the one or the plurality of sidelink BWPs for the continuous waveform and the one or the plurality of sidelink BWPs for the interlaced waveform are respectively set to correspond to one or a plurality of LBT bandwidths.

11. The communication device according to claim 1, wherein
the acquisition unit acquires information of a first resource pool including one or a plurality of sidelink BWPs for a continuous waveform and information of a second resource pool including one or a plurality of sidelink BWPs for an interlaced waveform,
the one or the plurality of sidelink BWPs for the continuous waveform and the one or the plurality of sidelink BWPs for the interlaced waveform are respectively set to correspond to one or a plurality of LBT bandwidths, and
the communication control unit performs, based on at least one of the information of the first resource pool and the information of the second resource pool, sidelink communication using an unlicensed band.

12. The communication device according to claim 1, wherein
the communication control unit is capable of performing both of sidelink communication using a continuous waveform and sidelink communication using an interlaced waveform.

13. The communication device according to claim 12, wherein
the communication control unit switches, based on an instruction from another communication device, the sidelink communication using the continuous waveform and the sidelink communication using the interlaced waveform.

14. The communication device according to claim 12, wherein
the communication control unit switches, based on information concerning a distance of the sidelink communication, the sidelink communication using the continuous waveform and the sidelink communication using the interlaced waveform.

15. The communication device according to claim 12, wherein
the communication control unit switches, according to a cast type of the sidelink communication, the sidelink communication using the continuous waveform and the sidelink communication using the interlaced waveform.

16. The communication device according to claim 12, wherein
the communication control unit switches between sidelink communication using a continuous waveform and sidelink communication using an interlaced waveform according to a physical channel of the sidelink communication.

17. The communication device according to claim 12, wherein
the communication control unit switches, according to capability of a communication device serving as a communication partner of the sidelink communication, the sidelink communication using the continuous waveform and the sidelink communication using the interlaced waveform.

18. A communication device comprising
a transmission unit that transmits information of a resource pool used for sidelink communication using an unlicensed band to another communication device that performs the sidelink communication, wherein
the resource pool includes one or a plurality of sidelink BWPs (Sidelink Bandwidth Parts), and
the one or the plurality of sidelink BWPs are set to correspond to one or a plurality of LBT bandwidths (Listen Before Talk Bandwidths).

19. A communication method executed by a communication device that performs sidelink communication using an unlicensed band, the communication method comprising:
an acquisition step of acquiring information of a resource pool including one or a plurality of sidelink BWPs (Sidelink Bandwidth Parts); and
a communication control step of performing, based on the information of the resource pool, sidelink communication using an unlicensed band, wherein
the one or the plurality of sidelink BWPs are set to correspond to one or a plurality of LBT bandwidths (Listen Before Talk Bandwidths).

20. A communication method executed by a communication device, the communication method comprising
a transmission step of transmitting information of a resource pool used for sidelink communication using an unlicensed band to another communication device that performs the sidelink communication, wherein
the resource pool includes one or a plurality of sidelink BWPs (Sidelink Bandwidth Parts), and
the one or the plurality of sidelink BWPs are set to correspond to one or a plurality of LBT bandwidths (Listen Before Talk Bandwidths).
